# EUROPEAN PATENT SPECIFICATION

(11) **EP 3 667 428 B1**
(45) Date of publication and mention of the grant of the patent: **09.11.2022**
(21) Application number: 19212132.5
(22) Date of filing: 28.11.2019
(51) Int. Cl.: G03G 15/00, H04N 1/00, H04N 1/60

(54) **MANAGEMENT SYSTEM, INFORMATION PROCESSING APPARATUS, CONTROL METHOD THEREFOR, AND STORAGE MEDIUM**
VERWALTUNGSSYSTEM, INFORMATIONSVERARBEITUNGSVORRICHTUNG, STEUERUNGSVERFAHREN DAFÜR UND SPEICHERMEDIUM
SYSTÈME DE GESTION, APPAREIL DE TRAITEMENT D'INFORMATIONS, PROCÉDÉ DE COMMANDE ASSOCIÉ ET SUPPORT D'ENREGISTREMENT

(30) Priority: 11.12.2018 JP 2018231593
(43) Date of publication of application: 17.06.2020
(73) Proprietor: CANON KABUSHIKI KAISHA, Ohta-ku Tokyo 146-8501 (JP)
(72) Inventor: TORIYABE, Hiroyuki, Tokyo 146-8501 (JP)
(74) Representative: WESER & Kollegen Patentanwälte PartmbB

(56) References cited:
- US-A1- 2005 141 057
- US-A1- 2012 188 596
- US-A1- 2016 352 976

## Description

### BACKGROUND OF THE INVENTION

### Field of the Invention

The present disclosure relates to a management system configured to manage a color of an image output by a printing apparatus.

### Description of the Related Art

In recent years, various printing apparatuses have been available in a commercial printing market. Output products printed by these printing apparatuses are used by customers as commodities, and thus there is a high demand for the color accuracy of images printed on the output products. However, the color of an image printed by a printing apparatus can vary due to various factors. For example, degradation of parts of a printing apparatus, an environment (temperature, moisture, etc.) in which the printing apparatus is installed, supplies or consumables such as toner, sheets, and the like used in printing by the printing apparatus, and/or the like can cause a change in color of images.

Therefore, in practical commercial printing sites, a person called a color expert performs a color management process to maintain desired high color quality in images printed by a printing apparatus. The color management process includes a plurality of processing steps. One of the processing steps is a color check process to check a color of an image printed by the printing apparatus subjected to color management. In the color check process, a predetermined chart is printed using the printing apparatus subjected to the color management, and a value of color (color value) of the image on the chart is measured using a colorimeter. The resultant color value is compared with a predefined target value (reference). Based on a comparison result, a judgment is made as to whether the measured color value of the image printed by the printing apparatus under the color management satisfies a predetermined color quality criterion (as to whether the difference between the measured color value and the target value is smaller than or equal to a threshold value). In a case where the predetermined color quality criterion is satisfied (the color difference is smaller than or equal to the threshold value), it is approved to perform a following printing step.

On the other hand, in a case where it is judged that the color of the image printed by the printing apparatus does not satisfy the predetermined color quality criterion (the color difference is greater than the threshold value), the color expert performs a color adjustment process on the printing apparatus. More specifically, in the color adjustment process, various calibration functions typified by density gradation correction are executed. After the color adjustment process is performed, the color expert again performs the color check process to check whether the color of the image printed by the printing apparatus has come to satisfy the predetermined color quality criterion. In a case where the required color quality criterion is not satisfied even after the color adjustment process is performed, the color expert performs a higher-level color adjustment process including regeneration of a color profile, a fine adjustment of each image forming condition, and/or the like.

In the commercial printing market, a wide variety of printing sheets are used depending on the type of commodities to be output, and in some cases, several tens of types of sheets are properly selected and used. Generally, characteristics of printing sheets have a great influence on the color of an image output by a printing apparatus.

In an environment, such as that in a printing company, in which a printing apparatus continues to operate for several hours after receiving an order for a large number of print jobs, there is a possibility that the color of an image may be influenced by a change in an apparatus condition and/or an environmental condition that may occur in a period after a color check process or a color adjustment process is performed to a start of each print job.

Therefore, from the viewpoint of the color accuracy of the output image, it is ideal to perform a color check process under the same print conditions (in terms of a sheet, print settings) for each print job immediately before the print job is started.

In recent years, a technique has been proposed to execute a color management process separately for each print job. Japanese Patent Laid-Open No. 2018-26740 discloses a technique in which when a print job is executed again, a color difference from color information obtained in a first-time execution of the print job is verified, and the verification result is notified to a user. The color information at the first-time output is obtained by measuring the output result of a predetermined color chart immediately after the print job is output for the first time.

A purpose of the technique disclosed in Japanese Patent Laid-Open No. 2018-26740 is to achieve an output result of re-execution of a print job as close as possible to an output result obtained in a previous execution of the print job. Therefore, the target reference value in the color check process is given by the color obtained immediately after the outputting of the previous print job is performed. In a case where the output of a print job is completed after a long time since the execution of the color adjustment function, a change may occur in a condition of printing apparatus and/or an environmental condition such as temperature, humidity and/or the like, and thus the target value is not necessarily equal to the color obtained in the ideal state immediately after the color adjustment function is executed.

US 2005/141057 A1 discloses a method of remotely giving a calibration instruction from a client to a printer. US 2012/188596 A1 discloses a method and apparatus for launching a calibrator process by which the user is guided through the process of calibrating the conditions used by a particular print job. US 2016/352976 A1 discloses a print control apparatus for controlling a printing apparatus that calculates the amount of change between a designated color and a color measured.

### SUMMARY OF THE INVENTION

The present invention in its first aspect provides a system as specified in claims 1 to 10.

The present invention in its second aspect provides an apparatus as specified in claim 11.

The present invention in its third aspect provides a method of controlling a system as specified in claims 12 to 18.

The present invention in its fourth aspect provides a method of controlling an apparatus as specified in claim 19.

The present invention in its fifth aspect provides a non-transitory computer-readable storage medium storing a computer program for causing a computer to execute a method of controlling an apparatus as specified in claim 20.

Further features of the present invention will become apparent from the following description of exemplary embodiments with reference to the attached drawings.

### BRIEF DESCRIPTION OF THE DRAWINGS

Fig. 1 is a conceptual diagram illustrating an overall configuration of a printing system according to an embodiment of the present disclosure.
Fig. 2 is a block diagram illustrating a hardware configuration including a site management server and a site management terminal according to an embodiment.
Fig. 3 is a block diagram illustrating a hardware configuration of a printing apparatus according to an embodiment.
Fig. 4A is a block diagram illustrating a software configuration of a site management server according to an embodiment, and Fig. 4B is a block diagram illustrating a software configuration of a site management terminal according to an embodiment.
Fig. 5 is a block diagram illustrating a software configuration of a printer controller of a printing apparatus according to an embodiment.
Fig. 6 is a diagram illustrating a database used by a color management system according to an embodiment.
Fig. 7 is a diagram illustrating an example of an environment setting screen for job-specific color check according to an embodiment.
Fig. 8 is a diagram illustrating an example of a color check setting edit screen in environment setting for job-specific color check according to an embodiment.
Fig. 9 is a diagram illustrating an example of a patch chart edit screen in environment setting for job-specific color check according to an embodiment.
Fig. 10 is a diagram illustrating an example of a judgment criterion edit screen in environment setting for job-specific color check according to an embodiment.
Fig. 11 is a diagram illustrating an example of a screen for setting an operation to be performed when color check is not passed in environment setting for job-specific color check according to an embodiment.
Fig. 12 is a diagram illustrating an example of a color adjustment setting edit screen in environment setting for job-specific color check according to an embodiment.
Fig. 13A is a diagram illustrating an example of a print job list display screen according to an embodiment, and Fig. 13B is a diagram illustrating an example of a detailed information screen displayed when a job-specific color check result is not acceptable.
Fig. 14 is a flow chart illustrating a process of setting registration of a job-specific color check process in a site management server according to a first embodiment.
Fig. 15 is a diagram illustrating an example of a setting screen related to a print job for which a job-specific color check is to be performed according to an embodiment.
Fig. 16 is a flow chart illustrating a process of executing job-specific color check in a site management server according to the first embodiment.
Fig. 17 is a flow chart illustrating a process executed by a site management server according to a second embodiment.
Fig. 18A is a diagram illustrating an example of a screen for setting an operation of deleting a job-specific color check profile after a print job is finished in an environment setting for a job-specific color check according to a third embodiment, and Fig. 18B is a diagram illustrating an example of a screen displaying a list of job-specific color check profiles waiting for a confirm-and-delete process.

### DESCRIPTION OF THE EMBODIMENTS

Embodiments of the present disclosure are described in detail below with reference to the accompanying drawings. Note that these embodiments are described by way of example only and not limitation. Also note that all features described in embodiments are not necessarily needed to practice the present disclosure.

### First Embodiment

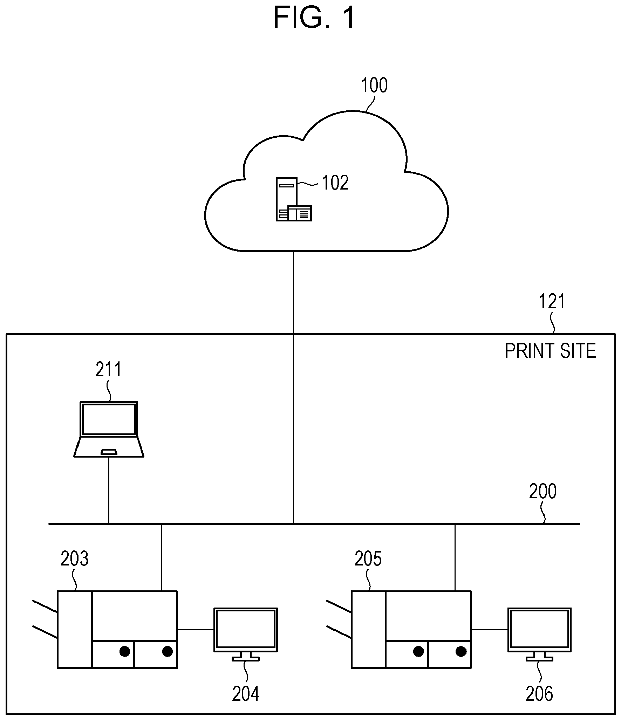

Fig. 1 is a diagram illustrating a configuration of a printing system according to a first embodiment.

A cloud environment 100 includes a cloud server and provides various services to terminal apparatuses connected via the Internet. In the first embodiment, it is assumed by way of example that a site management server 102 is a cloud server. However, the site management server 102 is not limited to a cloud server. A site management server 102 may be installed at a printing site and may be used on-premises.

The site management server 102 is an information processing apparatus configured to manage printing apparatuses 203 and 205 that operate at a print site 105. The site management server 102 is connectable to the printing apparatuses 203 and 205 to be managed to acquire information from the printing apparatuses 203 and 205. In addition, the site management server 102 transmits various control instructions to the printing apparatuses 203 and 205 in the site under management.

The site management server 102 is a cloud server installed in the cloud environment 100, and is connected to a site management terminal 211 described below via the Internet.

The site management terminal 211 is a terminal (an information processing apparatus) used by a color expert who manages the print site 105. The site management terminal 211 communicates with the site management server 102 and displays information about the printing apparatuses 203 and 205 on a display unit (not shown). The color expert performs a color management process with reference to the displayed information about the printing apparatuses 203 and 205. The color management process is a process executed to maintain the color of an image printed by a printing apparatus at desired color quality with reference to a predetermined criterion, and the color management process includes a plurality of steps. For example, the color management process includes a process of checking a color value of an image printed by a printing apparatus (a color check process), a color adjustment process of adjusting a color value of a printed image so as to satisfy a color quality criterion, and the like. The site management terminal 211 receives an instruction from the color expert, and transmits an instruction to the site management server 102 to execute various color management processes relating to the printing apparatuses 203 and 205 in the print site 105.

The printing apparatuses 203 and 205 are printing apparatuses that operate at the print site 105. The printing apparatuses 203 and 205 may be, for example, electrophotographic printers or inkjet printers. The printing apparatuses 203 and 205 each may be configured by connecting a printer to another apparatus as required. For example, a printer may be connected to a sheet feeding apparatus for expanding the sheet feeding capacity or a post-processing apparatus for performing various post-processes on a sheet output from the printer. To expand the print function, a print server (not shown) may be connected.

Operator terminals 204 and 206 are apparatuses used by operators of the respective printing apparatuses in performing various operations in using the printing apparatuses 203 and 205. Examples of the various operations may include setting of sheet information stored in the sheet feeding apparatus, issuing an instruction to execute an adjustment process on a printing apparatus, and the like. In the first embodiment, it is assumed by way of example that operation units provided with the respective printing apparatuses 203 and 205 are operator terminals 204 and 206. However, the operation units are not limited to the operator terminals 204 and 206. For example, in the configuration in which the print server is connected, an input/output apparatus of the print server may be used as an operator terminal. An in-site network 200 connects each apparatus to each other located in the print site 105 and connects each apparatus to an external network.

Next, hardware configurations of various apparatuses according to the first embodiment are described below.

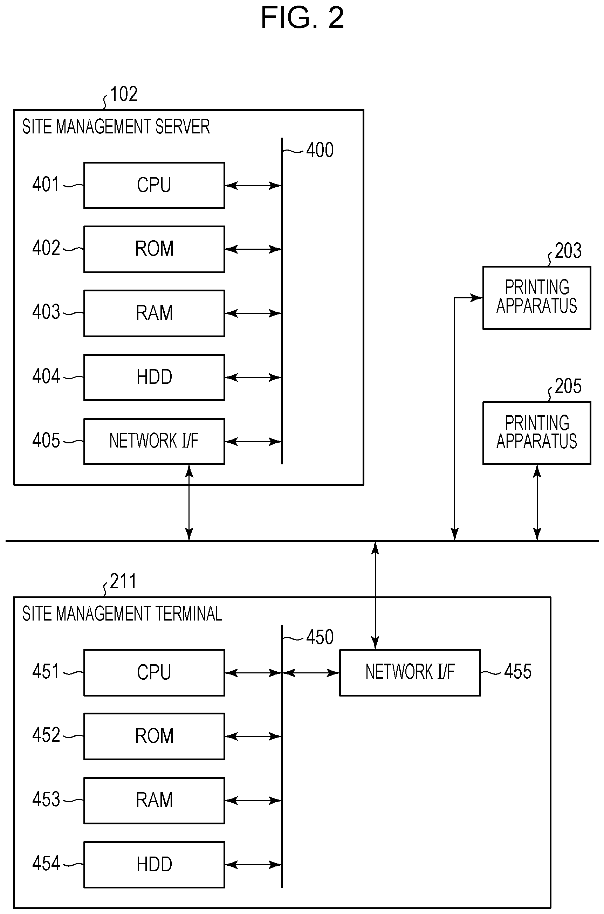

Fig. 2 is a block diagram illustrating a hardware configuration of a color management system at a print site, including the site management server 102 and the site management terminal 211 according to the first embodiment.

First, the hardware configuration of the site management server 102 is described.

A CPU 401 loads a control program from a ROM 402 or a hard disk (HDD) 404 into a RAM 403 and executes the loaded program to comprehensively control access to various devices connected to a system bus 400. The ROM 402 stores a control program and the like executable by the CPU 401. The RAM 403 mainly functions as a main memory, a work area, and the like used by the CPU 401. The RAM 403 is configured such that the memory capacity can be expanded by connecting an optional RAM to an expansion port (not shown). The hard disk (HDD) 404 stores a boot program, various applications, font data, user files, edit files, and the like. In the first embodiment, the HDD 404 is used. However, in addition to or instead of the HDD 404, an SD card, a flash memory, or the like may be used as an external storage apparatus. A network I/F 405 performs data communication with the site management terminal 211 and the printing apparatuses 203 and 205 via the network.

Next, the hardware configuration of the site management terminal 211 is described.

A CPU 451 loads a control program from a ROM 452 or a hard disk (HDD) 454 into a RAM 453 and executes the loaded program to comprehensively control access to various devices connected to a system bus 450. The ROM 452 stores a control program and the like executable by the CPU 451. The RAM 453 mainly functions as a main memory, a work area, and the like used by the CPU 451. The RAM 453 is configured such that the memory capacity can be expanded by connecting an optional RAM to an expansion port (not shown). The hard disk (HDD) 454 stores a boot program, various applications, font data, user files, edit files, and the like. In the first embodiment, the HDD 454 is used. However, in addition to or instead of the HDD 454, an SD card, a flash memory, or the like may be used as an external storage apparatus. A network I/F 455 performs data communication with the site management server 102 via the network.

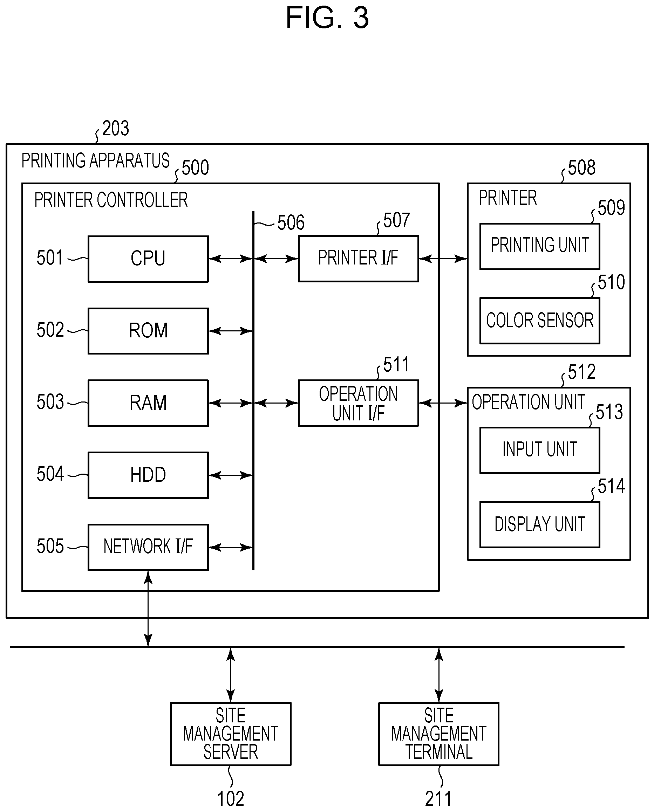

Fig. 3 is a block diagram illustrating a hardware configuration of the printing apparatus 203 according to the first embodiment. Note that the configuration of the printing apparatus 205 is similar to that of the printing apparatus 203, and thus the description thereof is omitted. The following description of operations and the like is given with reference to, by way of example, the printing apparatus 203, but the following description is also applicable to the printing apparatus 205.

A printer controller 500 is a controller of the printing apparatus 203, and performs processing for execution of printing processing, such as analysis of an input print job and developing image data. In the following description, the processing for printing is performed by way of example by the printer controller 500 of the printing apparatus 203. However, the processing may be performed by other apparatuses. The print server (not shown) connected to the printing apparatus 203 may perform processing such as receiving of a print job, analysis, and development of image data. In this case, the print server transmits the developed image data and various data for the printing process to the printing apparatus 203. Then, the printing apparatus 203 executes a printing process using the printer 508 based on the data received from the print server. A CPU 501 loads a control program from a ROM 502 or a hard disk (HDD) 504 into a RAM 503 and executes the loaded program to comprehensively control access to various devices connected to a system bus 506. The ROM 502 stores a control program and the like executable by the CPU 501. The RAM 503 mainly functions as a main memory, a work area, and the like used by the CPU 501. The RAM 503 is configured such that the memory capacity can be expanded by connecting an optional RAM to an expansion port (not shown). The hard disk (HDD) 504 stores a boot program, various applications, font data, user files, edit files, and the like. In the first embodiment, the HDD 504 is used. However, in addition to or instead of the HDD 504, an SD card, a flash memory, or the like may be used as an external storage apparatus. A network I/F 505 performs data communication with the site management server 102 and/or the site management terminal 211 via the network. A printer I/F 507 controls image output to the printer 508. The printer I/F 507 also controls a color sensor 510 disposed in the printer 508 to receive a color measurement result. The printer 508 includes at least an image forming unit (printing unit) 509 configured to perform a printing operation, and a color sensor 510 configured to perform a color measurement on a printed matter. The printer 508 may be connected to a sheet feeding apparatus (not shown) and/or a post-processing apparatus.

In the first embodiment, the color sensor 510 is installed on a sheet conveying path in the printing apparatus 203 such that at least one color sensor 510 is disposed between an image forming unit (a fixing apparatus (not shown)) of the printing unit 509 and a sheet exit. The color sensor 510 is capable of performing a color measurement on an image transferred to a sheet and fixed. Data obtained via the color measurement performed using the color sensor 510 includes, for example, a spectral value, a chromaticity value, and a density. The color of a chart image printed by the printing unit 509 is measured using the color sensor 510, and a correction table is generated based on a difference between the measured color and the target color value. Thus, it is possible to automatically execute calibration using the color sensor 510 without a user having to set the chart image on the sensor.

An effective use of the color sensor 510 makes it possible to automate various processes not only in calibration but also in other processes including outputting of other chart images and performing color measurement.

An operation unit I/F 511 controls displaying of the display unit 514 included in the operation unit 512 and controls inputting of various information accepted from the operator via the input unit 513. In the first embodiment, as described above, the operation unit 512 is synonymous with the operator terminals 204 and 206.

Next, software configurations of various apparatuses according to the first embodiment are described.

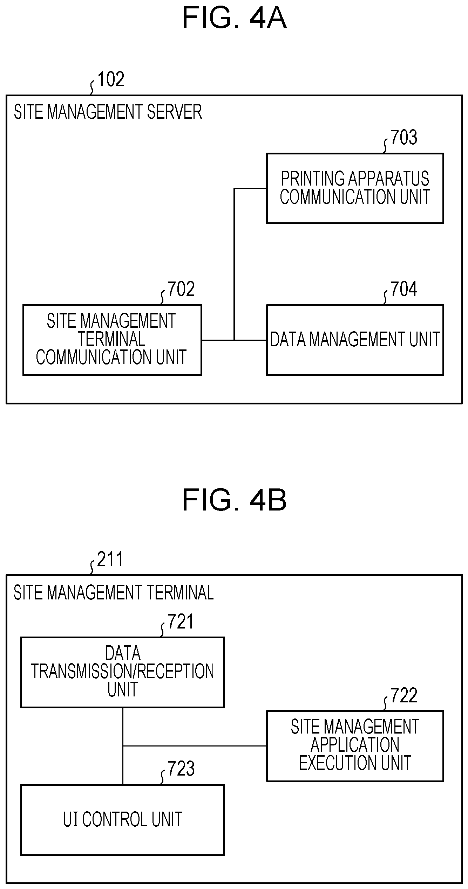

Fig. 4A is a block diagram illustrating a software configuration of the site management server 102 according to the first embodiment. These software modules are stored as programs in the HDD 404, and are realized by the CPU 401 by loading the programs in RAM 403 and executing them.

A site management terminal communication unit 702 receives various instructions accepted from a color expert who uses the site management terminal 211 via a site management application, which is an application used to manage a printing apparatus operating at a connected print site. For example, an instruction to perform an additional process by the printing apparatus 203 under management, an instruction to execute a color check process on a specific printing apparatus 203, and the like are received. The site management applications include a job management application and a color management application. Details of the site management applications will be described later.

A printing apparatus communication unit 703 performs data communication with the printing apparatus 203. For example, in accordance with an instruction received from the color expert via the site management application, the printing apparatus communication unit 703 transmits an instruction the printing apparatus 203 to execute color check process, a color adjustment process, or the like. When the color adjustment process is instructed, the printing apparatus communication unit 703 acquires, from the printing apparatus 203, information on a result of the color adjustment process executed by the printing apparatus 203. When the color check process is instructed, the printing apparatus communication unit 703 acquires, from the printing apparatus 203, data of the color measurement on the chart image performed by the color sensor 510, and uses the obtained data in judging the color check process. The received color value is compared with a target color value preset in a data management unit 704 and a difference (a color difference) is calculated. In a case where it is determined that the calculated difference is within a predefined threshold range, it is determined that the color of the image printed by the printing apparatus 203 satisfies the required color quality criterion. Satisfying the required color quality criterion indicates that the difference between the measured color value of the printed image and a preset target color value (reference) is smaller than a preset threshold value. Therefore, the printing apparatus communication unit 703 judges that the color value of the image printed by the printing apparatus currently satisfies the color quality criterion, and instructs the data management unit 704 to store the result of the color check process and instructs the UI control unit 723 (described later) to display the result. On the other hand, in a case where it is determined that the difference is greater than or equal to the threshold value, it is judged that the color of the image printed by the printing apparatus 203 does not satisfy the color quality criterion. In this case, the printing apparatus communication unit 703 transmits setting information on a color recovery process to the printing apparatus 203. For example, as the recovery process, the printing apparatus 203 automatically performs a color adjustment process (calibration). Furthermore, after the color adjustment process is completed, the printing apparatus communication unit 703 re-executes the color check process.

The data management unit 704 stores and manages various data related to the site management process. For example, the data of the printing apparatus 203 acquired by the printing apparatus communication unit 703 is stored. Furthermore, various kinds of content data distributed to the site management terminals 211 for use in executing the site management application are stored. Furthermore, setting information, target value information, and the like related to color check processes and color adjustment processes are stored and managed.

Fig. 4B is a block diagram illustrating a software configuration of the site management terminal 211 according to the first embodiment. These software modules are stored as programs in the HDD 454, and are realized by the CPU 451 by loading the programs in RAM 453 and executing them.

A data transmission/reception unit 721 performs data communication with the site management server 102. For example, various pieces of content data to be displayed on the site management application are received from the site management server 102. Various pieces of instruction information received from the color expert via the site management application are transmitted to the site management server 102. For example, an instruction to perform an additional process by the printing apparatus 203 under management, an instruction to execute a color check process on a specific printing apparatus 203, and the like are transmitted.

The site management application execution unit 722 executes an application for use by the color expert in managing the printing apparatus 203. The site management application execution unit 722 acquires information about the printing apparatus 203 in the print site 105 from the site management server 102. Furthermore, various control instructions, to be issued to the printing apparatus 203, are received from the color expert via the UI control unit 723 and are transmitted to the site management server 102.

Applications executed by the site management application execution unit 722 according to the present embodiment are described below taking, as examples, a job management application and a color management application.

The job management application is an application for a color expert to refer to or manage data of a print job input to the printing apparatus 203 under the management. More specifically, a list of print jobs, an execution status of each print job, and information indicating a result of job-specific color check process for each print job, and/or the like are displayed. Furthermore, instructions from the color expert, such as an instruction of setting/changing a print job, an instruction of executing printing, or the like are accepted.

The color management application is an application for a color expert to issue an instruction to perform a color check process or a color adjustment process. Details of the color check process and the color adjustment process will be described later.

The UI control unit 723 mainly executes processing related to displaying a UI screen for the site management application and accepting of user input operations.

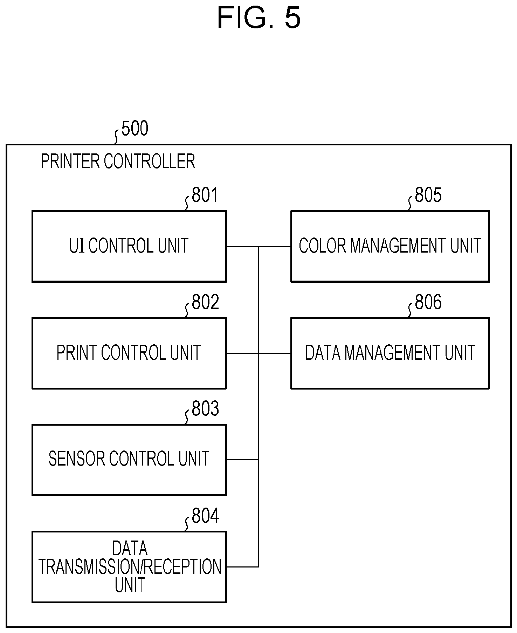

Fig. 5 is a block diagram illustrating a software configuration of the printer controller 500 of the printing apparatus 203 according to the first embodiment. These software modules are stored as programs in the HDD 504, and are realized by the CPU 501 by loading the programs in RAM 503 and executing them. The printing apparatus 205 has a similar software configuration to that of the printing apparatus 203, and thus a description thereof is omitted.

The UI control unit 801 controls displaying of the display unit 514 of the printing apparatus 203 and inputting from the input unit 513. The print control unit 802 generates and manages print job data based on a print job execution instruction. That is, in accordance with the print job execution instruction, the print control unit 802 performs processing used in executing the printing process, such as analysis of a print job, expansion into image data, and image compression/decompression, and/or the like. Processes such as writing and reading of the generated print job to and from the HDD 504 and managing history of printed jobs are also performed. Furthermore, processes such as suspending or interrupting print jobs, managing of execution order of print jobs, and/or the like are also performed. A sensor control unit 803 controls the color sensor 510 described above. When the sensor control unit 803 receives an instruction from the print control unit 802, the sensor control unit 803 executes a color measurement process on a printed material such as a chart image used for calibration. The color measurement result is transmitted to a color management unit 805 or a data management unit 806 (described later) or an external apparatus via a data transmission/reception unit 804. The data transmission/reception unit 804 manages data transmission/reception to/from the site management server 102. For example, chart color measurement results and execution result information obtained via various processes described later by the printing apparatus 203 are transmitted to the site management server 102. In addition, data related to output from a normal print job other than the data related to color management is transmitted and received to and from an external apparatus. A color management unit 805 controls processing for executing various functions for managing color quality, which is the color quality of an image printed by the printing apparatus 203. More specifically, when the difference between the measured color value of the color measurement chart data printed by the printing apparatus 203 and the target value (reference) is equal to or less than a threshold value, the color management unit 805 judges that the color quality is satisfied. This color quality is managed by the color management unit 805.

Examples of processes controlled by the color management unit 805 are described below.

The color check process is a process for checking the color quality of an image printed by the printing apparatus 203 as of the time of executing the process. When a color check process start instruction is received from the site management server 102 or when the color check process start condition (color check execution condition) is satisfied, the color management unit 805 of the printer controller 500 acquires chart data from the data management unit 806. The color management unit 805 then instructs the print control unit 802 to print the acquired chart data. Note that in a case where an instruction is also issued to the color sensor 510 to perform color measurement on the chart image printed based on the chart data, the color measurement instruction to the color sensor 510 is also transmitted to the print control unit 802 at the same time. However, the manner of giving the instruction is not limited to the above example. For example, the color management unit 805 may directly transmit the color measurement instruction to the sensor control unit 803. The measurement data may be expressed in a widely used data format such as CIE_L^{∗}a^{∗}b^{∗} color space, CIE_XYZ color space information, density information, or the like.

When the color measurement result in terms of the color of the printed chart image is acquired, the color management unit 805 transmits the color measurement result to the site management server 102 via the data transmission/reception unit 804. After the transmission, a result of judgment made using the color measurement result is received from the site management server 102. In a case where the judgment result is not good (indicating that the required color quality color quality criterion is not satisfied), a recovery control instruction is received from the site management server 102 together with the judgement result. The printer controller 500 controls various software modules according to the received instruction content.

Note that the site management server 102 determines the judgment result based on, for example, a general color difference (Delta_E). More specifically, the color difference between the measured color value and the target value is calculated for each patch. Then, the average value, the maximum value, and the like, of the color differences over all patches are calculated, and a judgment as to whether the measurement result is passed or not passed is made by comparing the calculated values with predefined judgment criteria.

In the first embodiment, the judgment process using the color measurement result is performed, by way of example but not limitation, by the site management server 102. Alternatively, for example, the printing apparatus 203 may execute the judgment process. In this case, the color management unit 805 calculates a difference between the measured color value and the target value preset in the data management unit 806, judges whether or not this difference is within a range predefined by a threshold value (that is, whether required color quality color quality criterion is satisfied). In a case where the judgment result is not good (when the difference is greater than or equal to the threshold value), the recovery process is performed according to the recovery control instruction received from the site management server 102.

### Standard color check process and job-specific color check process

In the present embodiment, two types of color check processes are performed. One of the two processes is a standard color check process, and the other one is a job-specific color check process.

The standard color check process is a known color check in which a measured color value is compared with a target color quality color quality criterion defined by a color standard such as G7 or Japan Color. The color check execution condition is, for example, to have received an instruction from a color expert, or to have executed printing on a predetermined number or more sheets. A predetermined color adjustment process is executed as the recovery process.

On the other hand, the job-specific color check process is a process that features the present embodiment and that is executed with settings customized for each print job. The target color quality criterion is a color of an image obtained by outputting image data in a state where the standard color check process has passed and with the same setting as the setting for the print job for which the color check process is to be perform. This color is defined by a value measured for an image that is obtained, after the standard color check process passes, by printing the chart data under the same conditions as the conditions under which the target print job is to be printed. The color check execution condition is that an instruction to execute a print job of interest is received. The present embodiment is described further by way of example for a case where the color check process for a target print job of interest is performed immediately before this print job is executed. However, the timing of executing the color check process is not limited to that immediately before the job is executed, but the color check process may be performed during the execution of the target print job of interest or immediately after the job is executed. As a recovery process, execution of a color adjustment process defined in operation information indicating a process to be performed when the color check is not good, which will be described later, or execution, interruption, suspension, etc. of the target print job of interest is instructed to the print control unit 802.

Note that the same setting (in the printing) as the setting for the target print job for which the color check is to be performed indicates that the setting is the same as the setting of the image processing such as setting of output sheets, the screen processing setting, and/or the like defined for the print job.

Next, the color adjustment process is described. The color adjustment processing is a so-called known calibration process, and various types of functions are provided in order to optimize a plurality of factors affecting the color quality. In the following description, by way of example, the color adjustment process is described for a case where the density gradation correction is performed. In the color adjustment process, first, chart data is printed, and a color measurement result of the printed chart image is obtained. The control contents relating to the printing of the chart data and the color measurement of the chart image are the same as those in the color check process described above, and thus a further detailed description thereof is omitted. Then, a calculation is performed to determine correction parameters for eliminating the difference between the acquired color measurement result and the target value preset in the data management unit 806, and the calculated correction parameters are stored in the data management unit 806. This correction parameters are applied when a subsequent print job is output and an image is printed.

The data management unit 806 stores and manages data related to management (color management) of color measurement results of the colors of images printed by the printing apparatus 203. Examples of data related to the color management are setting information for a color check process and a color adjustment process, a preset target value, a measured color value, a log of execution of each process, a color profile, an adjustment table, and/or the like which are parameter data used in executing a color management process applied to a print job. The data management unit 806 also stores and manages various data other than those used in the site management process. For example, the data management unit 806 handles information such as information indicating a device configuration of the printing apparatus 203, information indicating consumables of the printing apparatus 203, and/or the like.

Functions provided by the color management system according to the first embodiment are described below.

### Information database

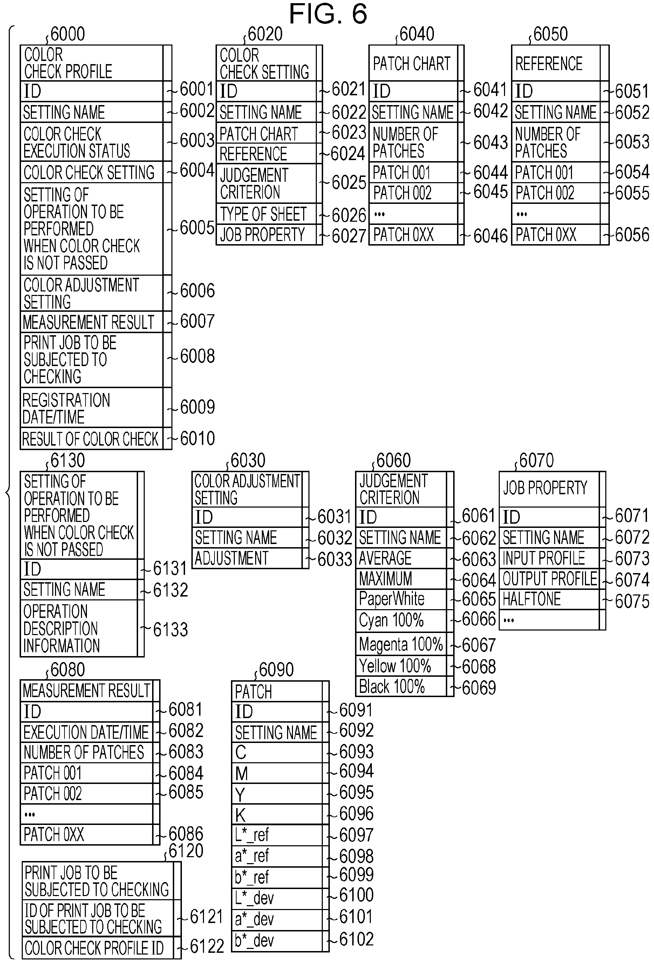

An information database provided in the color management system according to the first embodiment is described in detail with reference to Fig. 6.

This database is realized by the CPU 401 by reading a program stored in the ROM 402 or the HDD 404 of the site management server 102 into the RAM 403 and executing the program. The information database is stored in the data management unit 704 of the site management server 102, and data in the information database is referred to and updated as required by various control units in transmitting and receiving information to and from the site management terminal 211 and the printing apparatuses 203 and 205. However, the storage location of the database is not limited to the example described above, but the database may be stored in the data management unit 806 of the printer controller 500 of the printing apparatuses 203 or 205.

The job-specific color check profile DB 6000 is a color check profile DB (database) including a collection of information that is to be set when a color management process for a print job is executed. The color check profile 6000 includes a job-specific color check profile ID 6001 for identifying stored information, a setting name 6002 to be displayed on a UI described later, and also information described below. A job-specific color check execution status 6003 is information indicating an execution status of the job-specific color check process. More specifically, data such as "not yet executed", "being executed", "waiting for operator processing", "completed", and the like are stored.

A job-specific color check setting 6004 is link information pointing to a job-specific color check setting DB 6020 described later. An operation setting 6005 is link information pointing to an operation setting DB 6130 (described later) defining an operation to be performed when a job-specific color check is not passed. A color adjustment setting 6006 is link information pointing to a color adjustment setting DB 6030 (described later). A color measurement result 6007 is link information pointing to a color measurement result DB 6080 (described later).

A target print job 6008 is link information pointing to a target job DB 6120 (described later).

Registration date and time 6009 is information on the date and time when the job-specific color check profile was registered.

A result of color check 6010 is information indicating a result of a job-specific color check process.

This information indicates a result of a job-specific color check process for a print job whose job-specific color check execution status 6003 is in a "complete" state. More specifically, "passed", "not passed" or the like is described in this information.

The job-specific color check setting DB 6020 is a job-specific color check setting DB including a collection of information to be set when a job-specific color check process is executed. The job-specific color check setting DB 6020 includes a job-specific color check setting ID 6021 for identifying stored information, a setting name 6022 to be displayed on a UI described later, and the following information. A patch chart 6023 is link information pointing to a patch chart DB 6040 (described later). A reference 6024 is link information pointing to a reference DB 6050 (described later). A judgment criterion 6025 is link information pointing to a judgment criterion (threshold value) DB 6060 (described later). A type of sheet 6026 is sheet information indicating a type of a sheet used in executing a job-specific color check process. A job property 6027 is link information pointing to a job property DB 6070 (described later).

An operation setting DB 6130 includes a collection of information indicating a system operation to be performed when a result of a color check operation for a print job is not passed. Information described in the operation setting DB 6130 includes an ID 6131 for identifying stored information, a setting name 6132 to be displayed on a UI described later, and operation description information 6133, associated with an operation to be performed when a job-specific color check is not good.

The color adjustment setting DB 6030 includes a collection of information indicating settings to be set when a color adjustment process is executed. Information described in the color adjustment setting DB 6030 includes a color adjustment setting ID 6031 for identifying stored information, a setting name 6032 to be displayed on a UI described later, and the following information. An adjustment 6033 is information about a color adjustment process. More specifically, information described in the adjustment 6033 indicates a recovery process to be executed when a result of a job-specific color check process indicates that a color adjustment process is to be performed. The recovery process is, for example, a calibration process or a profile creation process. The number of color adjustment processes described in the color adjustment setting DB 6030 is not limited to one, but a plurality of adjustment processes may be described. In a case where a plurality of adjustment processes are described in the color adjustment setting DB 6030, information indicating an execution order of the plurality of adjustment processes may also be described.

The patch chart DB 6040 includes a collection of information indicating settings to be set when job-specific color check processes are executed. That is, information related to patch data used in printing a chart image used in a job-specific color check process is stored. The patch chart DB 6040 includes a patch chart ID 6041 for identifying stored information, a setting name 6042 to be displayed on a UI described later, and the following information. The number of patches 6043 indicates the number of patches to be printed on the patch chart. Reference numerals 6044 to 6046 denote link information pointing to a patch DB 6090 (described later). As many patch DBs as the number of patches specified by the number of patches 6043 are created and stored.

The reference DB 6050 includes a collection of information indicating settings to be set when job-specific color check processes are executed. The information described in this reference DB 6050 indicates a target value in each patch specified by patch chart information. The reference DB 6050 includes a reference ID 6051 for identifying stored information, a setting name 6052 to be displayed on a UI described later, and the following information. The number of patches 6053 is the number of patches to be printed on the patch chart. Reference numerals 6054 to 6056 denote link information pointing to a patch DB 6090 (described later). As many patch DBs as the number of patches specified by the number of patches 6053 are created and stored.

The judgment criterion DB 6060 includes a collection of information indicating settings to be set when job-specific color check processes are executed. The information described in the judgment criterion DB 6060 includes judgment items used in comparing calculated measurement color results with target values in judging in job-specific color check process whether color quality is satisfied, and also include information indicating threshold values of judgment items. The judgment criterion DB 6060 includes a judgment criterion ID 6061 for identifying stored information, a setting name 6062 to be displayed on a UI described later, and the following information. An average 6063 is an average value of difference amounts over all patches, and a maximum 6064 is a maximum value of the difference amounts over all patches. 6065 denotes a value indicating a value of a patch corresponding to while paper. Reference numerals 6066 to 6069 denote values of monochrome solid patches of cyan, magenta, yellow, and black, respectively. In the first embodiment, the judgment criteria are defined for the respective items indicated by reference numerals 6063 to 6069. However the items are not limited to those. A part of these items or a combination of items based on different indexes may be used.

The job property DB 6070 is a DB including a collection of information to be set when job-specific color check processes are executed. That is, information related to settings of printing of patch charts in job-specific color check processes are described in the job property DB 6070. The job property DB 6070 includes a job property ID 6071 for identifying stored information, a setting name 6072 to be displayed on a UI described later, and the following information. Items described in the job property DB 6070 and other DBs include setting items used in a print job for printing a patch chart by the printing apparatuses 203 and 205. More specific ally, an input profile 6073 includes an input color profile, and an output profile 6074 includes an output color profile and halftone 6075. Of course, the items are not limited to these, and the items may be those that are set by the print control unit 802 in the printing apparatus 203, and they may be variable depending on the specific printing apparatus 203.

The color measurement result DB 6080 is a DB including a collection of information indicating color measurement results in job-specific color check processes. That is, information relating to measured color values of patches printed by the printing apparatuses 203 and 205 is described. The judgment criterion DB 6080 includes a judgment criterion ID 6081 for identifying stored information, and the following information. Execution date and time 6082 is information on the date and time when a job-specific color check process was executed. The number of patches 6083 indicates the number of patches to be printed on the patch chart. Reference numerals 6084 to 6086 denote link information pointing to a patch DB 6090 described later. As many patch DBs as the number of patches specified by the number of patches 6083 are created and stored.

The patch DB 6090 is a DB includes a collection of information indicating settings to be set when job-specific color check processes are executed. That is, information related to patches making up charts is described. The patch DB 6090 includes a patch ID 6091 for identifying stored information, a setting name 6092 to be displayed on a UI described later, and the following information. Reference numerals 6093 to 6096 denote patch input signal information, which correspond to cyan, magenta, yellow, and black, respectively, and are information on input signal values of the patches. Reference numerals 6097 to 6099 are information relating to the target values which are the reference described in the reference DB 6050. In the first embodiment, the color state information indicating a target value is expressed in a commonly used CIE_L^{∗}a^{∗}b^{∗} color space. However, any format may be used as long as values used in job-specific color check processes can be expressed. For example, information expressed in a CIE_XYZ color space or density information may be used. For example, in a case where patch density values of predetermined input signal values are used in judgment in color check processes, target values are expressed in densities.

Reference numerals 6100 to 6102 denote information relating to the color measurement results described above with reference to the color measurement result DB 6080. In the first embodiment, the information 6100 to 6102 are described in the CIE_L^{∗}a^{∗}b^{∗} format as with 6097 to 6099, but information may be expressed in other formats. However, from the point of view of convenience in calculating the difference, in one embodiment, the color measurement result information is stored in the same format as that in which the target value is expressed.

The target print job DB 6120 is a DB (database) includes a collection of information on print jobs to be subjected to job-specific color check.

The target print job DB 6120 includes a target print job ID 6121 for identifying a target print job and the following information.

A job-specific color check profile ID 6122 is link information pointing to an ID 6001 of the job-specific color check profile DB 6000 described above.

The job-specific color check execution status is information indicating an execution status of the job-specific color check process for the target print job. More specifically, data such as "not yet executed", "being executed", "waiting for operator processing", "completed", and the like are stored.

### Site management application UI

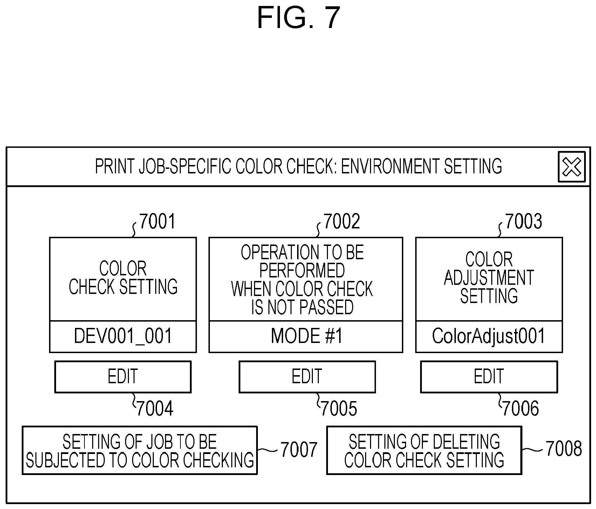

Next, the site management application executed by the site management terminal 211 in the color management system according to the first embodiment is described in further detail below with reference to Figs. 7 to 13. As described above, the site management application handles information used by the color expert in managing printing apparatuses. However, in the following description, only functions related to job-specific color check are explained. UI screens used here are all generated and controlled by the site management application execution unit 722 of the site management terminal 211, and are displayed on a display unit (not shown) via the UI control unit 723. Furthermore, an instruction from the color expert is accepted via the UI and an operation unit (not shown).

Fig. 7 is a diagram illustrating an example of an environment setting screen provided by the color management application for a job-specific color check process.

Reference numerals 7001 to 7003 denotes items respectively corresponding to job-specific color check setting 6004 to color adjustment setting 6006 in the job-specific color check profile 6000. The contents set in this environment setting UI are referred to when the job-specific color check profile 6000 is created later.

An edit button 7004 is a button for opening a screen for job-specific color check setting (described later). An edit button 7005 is a button for opening a screen for setting an operation to be performed when a job-specific color check is not good (described later). An edit button 7006 is a button for opening a screen for color adjustment setting (described later).

Reference numeral 7007 denotes a button for opening a screen for setting a target to be subjected to a job-specific color check (described later).

Reference numeral 7008 denotes a button for opening a screen for setting deleting of a job-specific color check setting (described later).

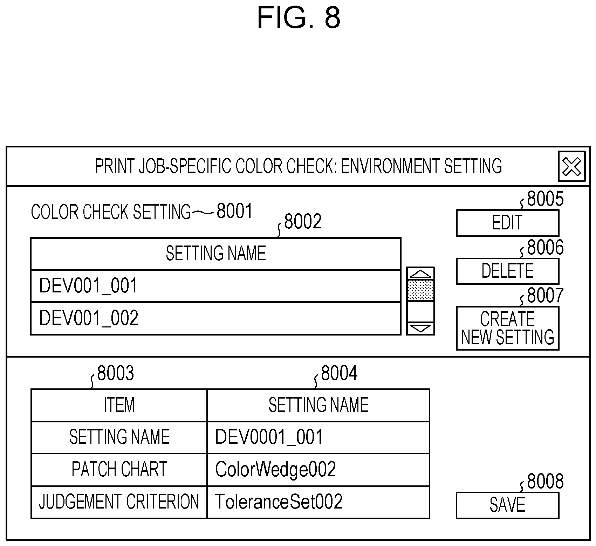

Fig. 8 is a diagram illustrating an example of a screen for editing job-specific color check setting in the environment setting of the site management application according to the first embodiment.

When the edit button 7004 for job-specific color check setting is pressed on the screen of Fig. 7, the site management application execution unit 722 generates the specified UI screen and displays it on a display unit (not shown) via the UI control unit 723.

In a job-specific color check setting list 8001, job-specific color check settings registered in the printing apparatus 203 are selectively displayed in the form of a list. Information about these settings is managed by the data management unit 704 of the site management server 102. The site management application execution unit 722 of the site management terminal 211 inquires the data management unit 704 to acquire job-specific color check setting information and displays the acquired information. A setting name list 8002 corresponds to the setting name 6022 of the acquired job-specific color check setting DB 6020. When an arbitrary job-specific color check setting is selected from the setting name list 8002 by the color expert, the site management application execution unit 722 inquires the data management unit 704 to acquire detailed information on the color check setting. The acquired detailed information related to the color check setting is displayed in the item 8003 and the setting name 8004. More specifically, information described from the patch chart 6023 to the job property 6027 stored in the job-specific color check setting DB 6020 is displayed in the item and the setting name. The setting name displayed in the patch chart field corresponds to the setting name 6042 in the patch chart DB 6040. The setting name displayed in the judgment criterion field corresponds to the setting name 6062 in the judgment criterion DB 6060.

An edit button 8005 is a button for editing the job-specific color check setting. When the edit button 8005 is pressed, it becomes possible to edit the contents of each item. Details of editing of each item will be described later. After editing of the setting is performed in a desired manner by the color expert, if a save button 8008 is pressed, the site management application execution unit 722 transmits the editing information to the site management server 102 and updates the registration information of the data management unit 704. A delete button 8006 is a button for deleting the job-specific color check setting. When the delete button 8006 is pressed by the color expert, the site management application execution unit 722 notifies the site management server 102 that the job-specific color check setting information selected in the setting name list 8002 is to be deleted. In response, the selected job-specific color check setting information is deleted from the data management unit 704 and is also deleted from the setting name list 8002. A create new setting button 8007 is a button for creating a new job-specific color check setting. When a "create new setting" button 8007 is pressed by the color expert, the site management application execution unit 722 creates a new job-specific color check setting DB 6020 and displays it on this screen. More specifically, the site management application execution unit 722 transmits information on the job-specific color check setting DB 6020 to be newly created to the site management server 102 and stores it in the data management unit 704.

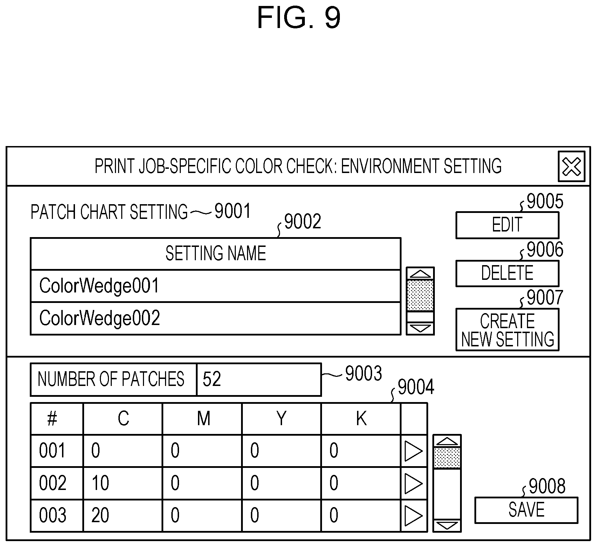

Fig. 9 is a diagram illustrating an example of a patch chart editing screen in the setting of the environment of the site management application according to the first embodiment.

When the edit button 8005 in the patch chart item field for the job-specific color check setting is pressed on the screen shown in Fig. 8, the site management application execution unit 722 generates the UI screen for the editing and displays the UI screen on a display unit (not shown) via the UI control unit 723.

In a patch chart setting list 9001, patch chart settings registered in the printing apparatus 203 are selectively displayed in the form of a list. Information about these settings is managed by the data management unit 704 of the site management server 102. Accordingly, the site management application execution unit 722 of the site management terminal 211 obtains patch chart setting information by inquiring the data management unit 704. The acquired patch chart setting information is displayed. A setting name 9002 corresponds to the setting name 6042 in the acquired patch chart DB 6040. When an arbitrary patch chart setting in the list of the setting name 9002 is selected by the color expert, the site management application execution unit 722 inquires the data management unit 704 to acquire detailed information on the patch chart setting. In the list of setting names 9002, it is allowed to select one of patch charts registered in advance in the printing apparatus 203. For example, a 51-color patch according to Japan Color may be selected. It is also allowed to select a user-defined patch chart created by a user via a menu of create new setting 9007 (described later). The acquired detailed information on the patch chart setting is displayed in a field of the number of patches 9003 and a display area of the list 9004. The items and setting names displayed here are based on information corresponding to data "number of patches 6043",..., data "patch 6046" described in the patch chart DB 6040. That is, the number of patches 9003 corresponds to the number of patches described in the number of patches 6043 of the patch chart DB 6040, and values displayed in the list 9004 correspond to input signal values of patches described in 6044 to 6046 of the patch chart DB 6040. In the case of a patch chart stored in advance in the printing apparatus 203, input signal values are stored in advance is stored in the patch chart DB 6040, and these values are referred to. On the other hand, in the case of a user-defined patch chart, input signal values are input by the user using the menu of the create new setting 9007 (described later) and stored in the patch chart DB 6040, and these values are referred to. As for items displayed in the list 9004, as many rows are generated as the number of patches displayed in the number of patches 9003. For example, detailed information on a patch 001 (6044) is described in the patch DB 6090 pointed to by link information described in the patch 001 (6044), and thus input signal values (6093 to 6096) described in the patch DB 6090 are displayed in the list 9004. Buttons 9005 to 9008 are respectively for editing, deleting, newly creating, and saving patch chart settings. When these buttons 9005 to 9008 are pressed, operations are performed on the patch chart database 6040. These operations are similar to the operations performed when the respective buttons 8005 to 8008 on the job-specific color check setting screen shown in Fig. 8 are pressed, and thus a further description thereof is omitted.

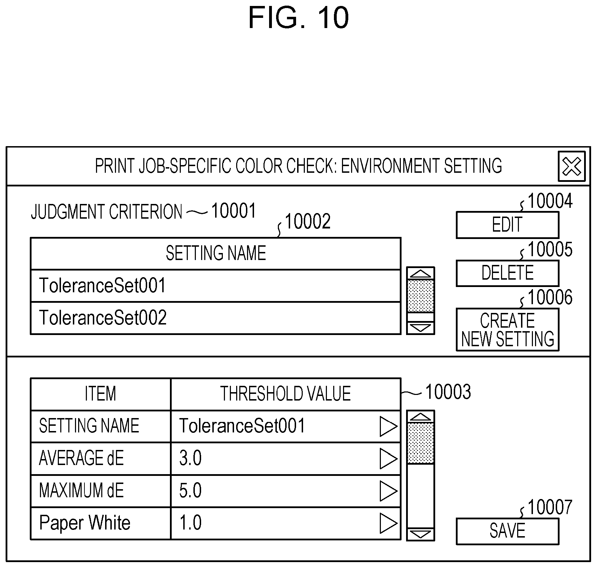

Fig. 10 is a diagram illustrating an example of a judgment criterion editing screen in the setting of the environment of the site management application according to the first embodiment.

On the screen shown in Fig. 10, if edit button 1004 in the judgement criteria item setting area in the job-specific color check setting is pressed, the site management application execution unit 722 generates the UI screen for the editing and displays the screen on a display unit (not shown) via the UI control unit 723.

In a judgment criterion list 10001, judgment criterion settings registered in the printing apparatus 203 are selectively displayed in the form of a list. Information about these settings is managed by the data management unit 704 of the site management server 102. The site management application execution unit 722 of the site management terminal 211 inquires the data management unit 704 to acquire judgment criterion setting information and displays the acquired information. A setting name displayed in the setting name list 10002 corresponds to the setting name 6062 described in the judgment criterion DB 6060. In the setting name list 10002, it is also allowed to select a default judgment criterion setting stored in advance in the printing apparatus 203 or a user-defined judgment criterion setting generated by a user using a create new setting menu 10006 (described later). When an arbitrary judgment criterion setting in the setting name 6062 is selected by the color expert, the site management application execution unit 722 makes an inquiry to the data management unit 704 to acquire detailed information on the judgment criterion setting, and displays the acquired information in the list 10003. The items and setting names displayed here are based on information corresponding to data "average 6063",..., data "black 100% 6069" described in the judgment criterion DB 6060. In the case of a default judgment criterion setting, values stored in advance in the printing apparatus 203 are saved in the judgment criterion DB 6060, and these values are referred to. On the other hand, in the case of a user-defined judgment criterion, input signal values are input by a user using the create new setting menu 10006 (described later) and stored in the judgment criterion DB 6060, and these values are referred to. Buttons 10004 to 10007 are respectively for editing, deleting, newly creating, and saving judgment criterion settings. Operations performed when these buttons 10004 to 10007 are pressed are similar to the operations performed on the judgment criterion DB 6060 when the buttons 8005 to 8008 for editing, deleting, newly creating, and saving judgment criterion settings, on the job-specific color check setting screen shown in Fig. 8, are pressed, and thus a further description thereof is omitted.

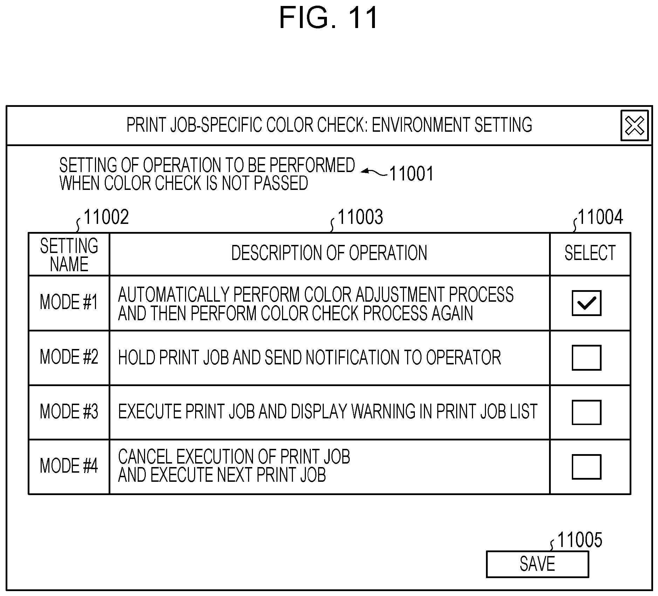

Fig. 11 is a diagram illustrating an example of a screen for editing operation to be performed when a job-specific color check result is not good in setting of the environment of the site management application according to the first embodiment.

On the screen shown in Fig. 7, if the edit button 7005 is pressed for editing the setting of the operation to be performed when the job-specific color check is not good, the site management application execution unit 722 generates the UI screen for the editing and displays the screen on a display unit (not shown) via the UI control unit 723.

In the list 11001, operations executable by the color management system when job-specific color checking is not good are displayed in the form of a slit. Information about these settings is managed by the data management unit 704 of the site management server 102. Thus, the site management application execution unit 722 of the site management terminal 211 makes an inquiry to the data management unit 704 to acquire the operation setting information defining the operation to be performed when the result of the job-specific color check is not good, and displays the acquired information in the setting name 11002 and the operation description 11003.

The items and setting names displayed here are based on information corresponding to data "setting name 6132" and data "operation description information 6133" described in the operation setting DB 6130 defining operations to be performed when the result of the job-specific color check is not good.

When a check box of a selection 11004 is checked and a save button 11005 is pressed, the site management application execution unit 722 transmits edit information to the site management server 102 and updates the registration information stored in the data management unit 704.

The setting of an operation to be performed when a result of a job-specific color check is not good is described in further detail below with reference to four specific examples.

In a case where a setting mode #1 is selected, the site management server 102 instructs the printing apparatus 203 to execute a color adjustment process according to information registered in the color adjustment setting DB 6030. When the execution of the color adjustment is completed, the site management server 102 instructs the printing apparatus 203 to again execute the color management process.

In a case where a setting mode #2 is selected, the site management server 102 instructs the printing apparatus 203 to suspend the print job, and notifies the color expert that the result of the job-specific color check process is not good.

In a case where a setting mode #3 is selected, the site management server 102 instructs the printing apparatus 203 to execute the print job, and notifies the color expert that the result of the job-specific color check process is not good as in the case of the setting mode #2.

In a case where a setting mode #4 is selected, the site management server 102 instructs the printing apparatus 203 to suspend the print job, and notifies the color expert that the result of the job-specific color check process is not good. Furthermore, the site management server 102 instructs the printing apparatus 203 to proceed to a next print job.

In a case where a result of re-execution of the color check process is not good, a predetermined operation defined by the system is to be performed. The predetermined operation is one of operations in mode #2, mode #3, and mode #4. One of operations in mode #2, mode #3, and mode #4 may be selected on a UI screen (not shown) in advance by the color expert thereby specifying the operation to be performed when the result of re-execution of the color check process is not good.

As a method of notifying that the result of the job-specific color check process is not good, a message may be displayed on the UI screen of the site management terminal 211. However, the method is not limited to this. For example, this message may be transmitted to the printing apparatus 203 so as to display a warning on the display unit of the printing apparatus 203, or a lamp such as a tally lamp may be controlled to blink. In a case where there is another mobile terminal apparatus carried by the color expert, a warning may be transmitted to the mobile terminal apparatus.

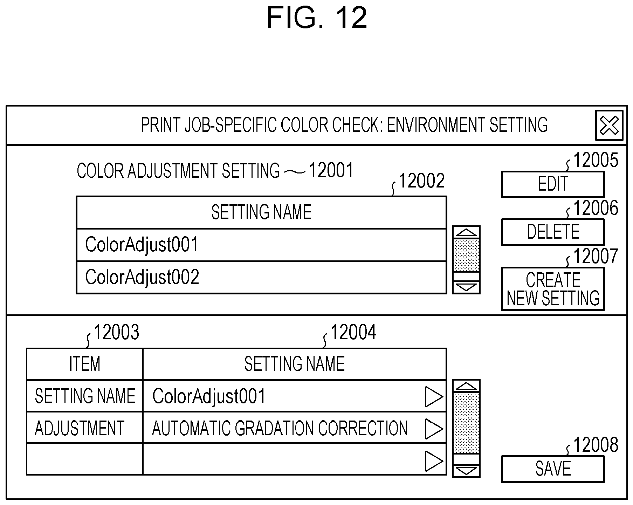

Fig. 12 is a diagram illustrating an example of a screen for editing color adjustment setting in the setting of the environment of the site management application according to the first embodiment.

When the edit button 7006 for editing adjustment setting on the screen shown in Fig. 7 is pressed, the site management application execution unit 722 generates the UI screen for the editing and displays the screen on a display unit (not shown) via the UI control unit 723.

In color adjustment settings 12001, color adjustment settings are selectively displayed in a list 12002. Information about these settings is managed by the data management unit 704 of the site management server 102. Thus, the site management application execution unit 722 of the site management terminal 211 inquires the data management unit 704 to acquire color adjustment setting information and displays the acquired information. Information displayed in a list 12002 corresponds to information described in the setting name 6032 of the acquired color adjustment setting DB 6030. When one of color adjustment settings is selected by the color expert from the list 12002, the site management application execution unit 722 makes an inquiry to the data management unit 704 to acquire detailed information on the color adjustment setting, and displays the acquired information in the item 12003 and the setting name 12004. The items and setting names displayed here are based on information corresponding to the setting name 6032 and the adjustment 6033 described in the color adjustment setting DB 6030. Buttons 12005 to 12008 are respectively for editing, deleting, newly creating, and saving color adjustment settings. These buttons 12005 to 12008 respectively operate in a similar manner to the buttons, on the job-specific color check setting screen shown in Fig. 8 for editing, deleting, newly creating, and saving settings in the color adjustment setting DB 6030, and thus a further description thereof is omitted.

As described above, via each of the screens shown in Figs. 7 to 12, the color expert performs environment settings used in performing job-specific color management. Note that the UI screens for environment settings and the setting items and formats displayed on the UI screens are merely examples, and the UI screens may be configured in other manners as long as the same purpose can be achieved, that is, for example, it is allowed to performed the environment settings and display results.

The environment setting information on the color management, which has been stored in the data management unit 704 in the site management server 102 in response to the instruction issued by the site management application execution unit 722 in the site management terminal 211, is transferred from the printing apparatus communication unit 703 to the printing apparatus 203. The printer controller 500 of the printing apparatus 203 stores the environment setting information, received via the data transmission/reception unit 804, in the data management unit 806. In accordance with the environment setting information, the color management unit 805 executes a job-specific color check process when a job-specific color check execution condition is satisfied. When the job-specific color check process is completed, the color management unit 805 stores color measurement result information in the data management unit 806. This color measurement result information is transferred to the site management server 102 of the site management terminal 211 and stored in the data management unit 704. The data management unit 704 stores the color measurement result information received from the color management unit 805 in corresponding data fields 6091 to 6102 of the patch DB 6090.

### Method of displaying job-specific color check results

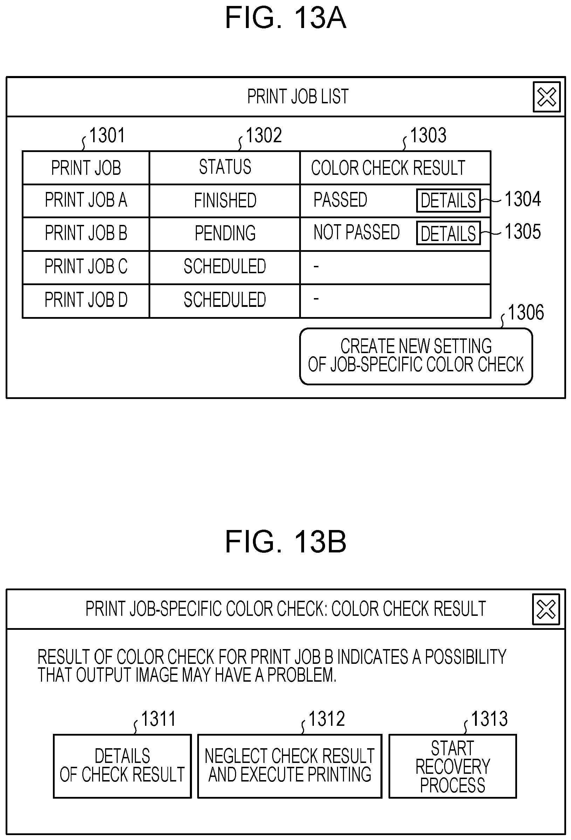

Next, an example of a UI screen on which the job management application displays a job-specific color check result for each print job is described with reference to Figs. 13A and 13B.

Fig. 13A is a diagram illustrating an example of a screen for displaying a list of print jobs treated by the site management application according to the first embodiment.

When the job management application is activated on the site management terminal 211, the site management application execution unit 722 acquires print job information from the printing apparatus 203 via the printing apparatus communication unit 703. Then, the UI is generated based on the acquired print job information and is displayed on a display unit (not shown) via the UI control unit 723. In the list, names of print jobs given to the printing apparatus 203 are displayed in a print job column 1301.

In a status field 1302, job status information indicating an execution status of each print job is displayed.

In a color check result field 1303, job-specific color check result information for each print job subjected to a job-specific color check process is displayed, and more specifically, information is displayed to indicate whether results of the job-specific color check processes are "passed" or "not passed".

When a details button 1304 or 1305 for detailed information on job-specific color check result information is pressed, the job management application displays a detailed information screen for job-specific color check result on the display unit.

A button 1306 for creating new setting of job-specific color check will be described later.

A screen for displaying detailed information related to the operation to be performed when the job-specific color check result is not good is described below with reference to Fig. 13B. In the following description, it is assumed by way example, that the mode #2 is specified as the operation to be performed when the job-specific color check result is not good.

The operation in the mode #2 is defined as suspending a print job and sending a notification to an operator. The site management application execution unit 722 displays the screen shown in Fig. 13B thereby notifying that a result of job-specific color check is not good, and prompting an operator to perform inputting.

A "details of check result" button 1311 is a button for displaying a detailed information screen for displaying detailed information on the job-specific color check result. When this button is pressed, the site management application execution unit 722 displays detailed information on the job-specific color check process on the display unit. The detailed information on the job-specific color check process includes general contents such as actual measurement values for items of the judgement criteria 10001, or a measurement value and a reference value of each color patch of a patch chart.

A "neglect check result and execute printing" button 1312 is a button for issuing an instruction to neglect the job-specific color check result and execute a print job. When this button is pressed, the site management application execution unit 722 finishes the color management process for the print job and instructs, via the site management server 102, the printing apparatus 203 to resume the print job being suspended.

A "recovery process start" button 1313 is a button for instructing the start of the recovery process. When this button is pressed, the site management server 102 refers to the setting of the color adjustment setting information 6006 described in the job-specific color check profile DB 6000 and instructs the execution of the adjustment process set in the printing apparatus 203. When the execution of the adjustment process is completed, the site management application execution unit 722 again executes the job-specific color check process. If the result of the job-specific color check process performed again is good, a message "passed after adjustment" is displayed in the job-specific color check result 1303. On the other hand, if the result of the job-specific color check process performed again is not good, the displaying of "not passed" in the job-specific color check result 1303 is maintained.

The operation performed when the result of the job-specific color check process is not good has been described above for a case, as an example, in which the operation in the mode #2 is selected.

In modes #3 and #4, "not passed" is displayed in the job-specific color check result 1303. On the details screen for displaying detailed information on the job-specific color check result, a message indicating the operation contents in each mode is displayed, and the neglect check result and execute printing button 1312 and the start recovery process button 1313 are hidden.

When the result of the job-specific color check process is good, "passed" is displayed in the job-specific color check result 1303. On the details screen for displaying detailed information on the job-specific color check result, only a message indicating that the job-specific color check result is good and the details of check result button 1311 are displayed.

Based on the processes and operations of each server, terminal, and printing apparatus described above, an example of job-specific color check process controlled by the site management server 102 is described below.

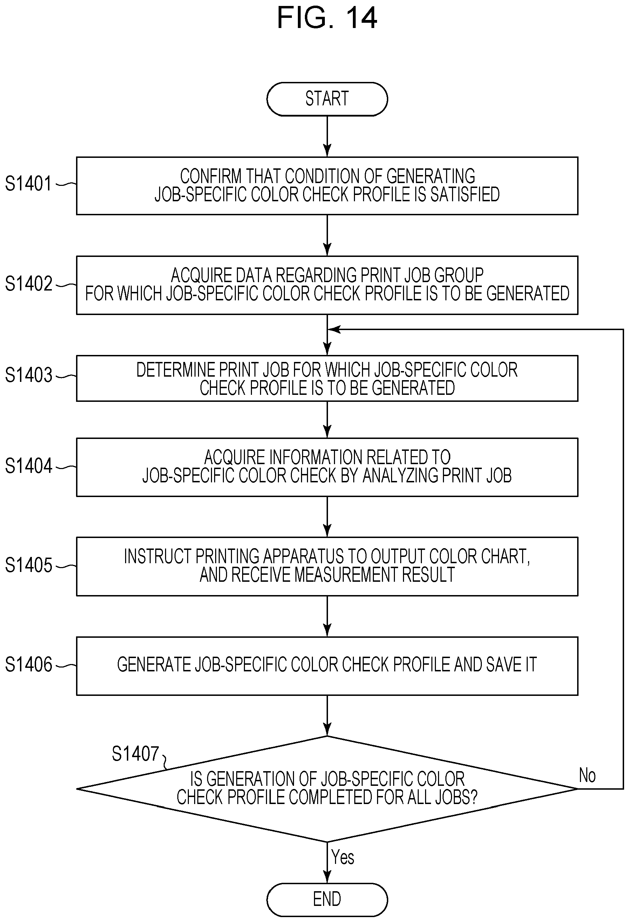

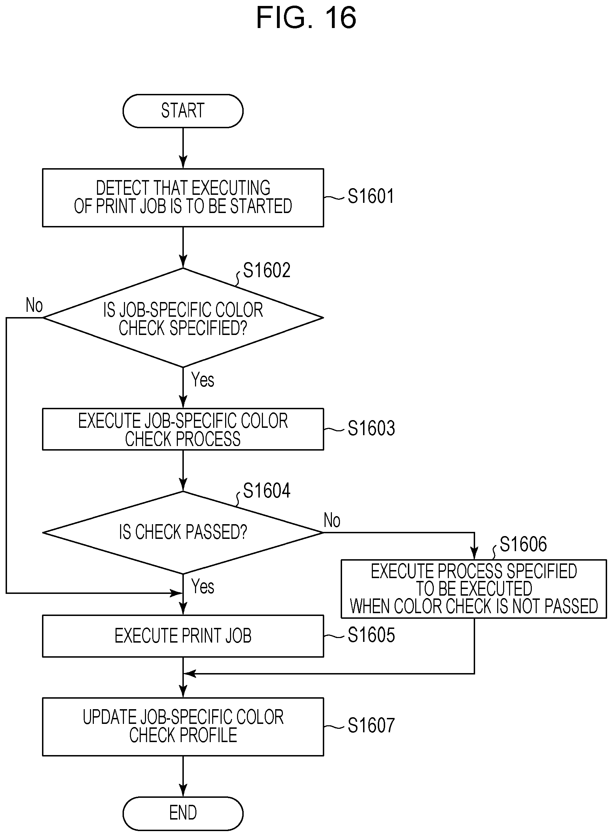

Figs. 14 and 16 are flow charts illustrating processes executed by the site management server 102 according to the first embodiment. Note that the process shown in this flow chart is achieved by the CPU 401 by loading a program from the HDD 404 into the RAM 403 and executing the loaded program.

Note that a process associated with the process shown in this flow chart performed by the site management terminal 211 is achieved by the CPU 451 by loading a program from the HDD 454 into the RAM 453 and executing the loaded program.

Note that a process associated with the process shown in this flow chart performed by the printing apparatus 203 is achieved by the CPU 501 by loading a program from the HDD 504 into the RAM 503 and executing the loaded program.

First, a control flow relating to setting and registering of job-specific color check processes is described below with reference to the flow chart shown in Fig. 14.

In step S1401, the CPU 401 determines that a job-specific color check profile creation condition is satisfied. More specifically, when a notification of completion of the standard color check process is received from the printing apparatus 203, the CPU 401 determines that a job-specific color check profile creation condition is satisfied. As a result, it is determined that the printing apparatus 203 is in a state in which an ideal image color can be output. Also in a case where a notification that a new job-specific color check profile creation button 1306 in Fig. 13 is pressed is received from the site management terminal 211, it is determined that a job-specific color check profile creation condition is satisfied. In this case, a user determines that the printing apparatus 203 is currently in a state in which it is possible to output the color of the image desired by the user.

As described above, in the present flow, after it is confirmed that the printing apparatus is in a state in which it is possible to print an image with an appropriate color, a job-specific color check profile for each print job is generated.

In a case where the profile creation condition is satisfied, the CPU 401 instructs the printing apparatus 203 to suspend execution of the print job.

In step S1402, data of one or more print jobs for which a job-specific color check profile is to be created is acquired.

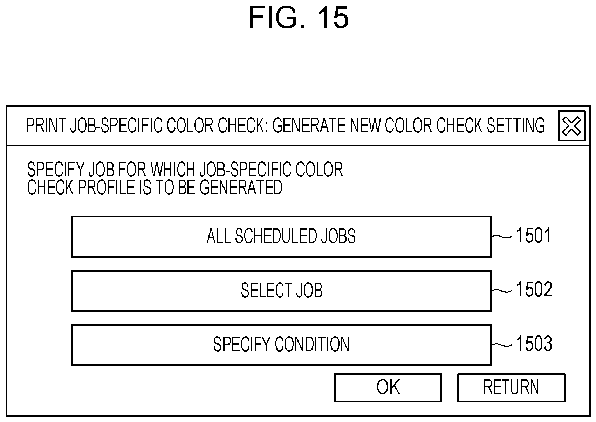

Fig. 15 illustrates an example of a UI screen for setting a method of determining a print job to be subjected to a job-specific color check process. This UI screen is displayed on a display unit of the site management terminal 211 when the "setting of job to be subjected to color checking" button 7007 in Fig. 7 is pressed. On this UI screen, it is allowed to set the target print job as one of the environment settings. Alternatively, the UI screen may be displayed on a display unit of the site management terminal 211 when the "create new setting of job-specific color check" button 1306 is pressed in step S1401.

A specific example of setting a job-specific color check process is described below.

In a case where an "all scheduled jobs" button 1501 is selected, the CPU 401 requests the printing apparatus 203 for information related to each of all print jobs scheduled to be executed (that is, scheduled to be printed) and acquires the information.

In a case where a "select job" button 1502 is selected, the CPU 401 requests the printing apparatus 203 for data of all scheduled print jobs and acquires them. Thereafter, the CPU 401 further requests the site management terminal 211 to display the acquired print job information on the display unit and to display a UI screen for accepting selection from the color expert. Information about each print job selected by the color expert is received from the site management terminal 211.

In a case where a "specify condition" button 1503 is selected, the CPU 401 requests the printing apparatus 203 to provide data of all scheduled print jobs and acquires them. The CPU 401 also requests the site management terminal 211 to display a UI screen (not shown) for accepting a job-specific color check process conditions specified by the color expert. The conditions may be those related to, for example, the type of sheet to be used, the number of pages to be printed, the contents of various color settings, the name of the print job, customer information, and the like.

Upon receiving information specifying the condition of the process from the site management terminal 211, the CPU 401 identifies print job data to be subjected to the job-specific color check process based on the print job data received from the printing apparatus 203 and the information specifying the condition.

In step S1403, the CPU 401 selects one print job to be subjected to the process of creating the job-specific color check profile from one or more print jobs to be subjected to the color check process.

In step S1404, the CPU 401 analyzes the target print job and acquires information related to the job-specific color check process. The acquired information is a part of information constituting the job-specific color check profile 6000, such as a print job ID 6121, a type of sheet 6026, a job property 6027, and/or the like.

That is, values (setting values) of the condition used in outputting a print job subjected to the color check process are acquired together with an ID identifying the print job.

In step S1405, the CPU 401 requests the printing apparatus 203 to print a color chart and to acquire a measurement value. The printing apparatus 203 transmits the measurement value to the CPU 401. As a result, the CPU 401 acquires reference data used in the color check process.

In step S1406, the CPU 401 generates a job-specific color check profile for the print job to be processed. More specifically, the print job information acquired in step S1404 and various environment setting values for the job-specific color check process described above with reference to Fig. 7 are respectively stored in corresponding fields of the job-specific color check profile 6000. Furthermore, the measurement values acquired in S1405 are stored in the reference DB 6050.

If the CPU 401 determines in S1407 that a job-specific color check profile has been generated for each of all print data determined in S1402 to be subjected to the process, the CPU 401 ends the processing flow and permits the printing apparatus 203 to start a print job.

On the other hand, in a case where there is a print job for which a job-specific color check profile has not yet been created, the CPU 401 returns to S1403 to perform the process on a next print job.

Next, a control flow relating to the execution of the job-specific color check process is described below with reference to the flow chart shown in Fig. 16.

Using the job-specific color check profile for each print job generated via the process shown in Fig. 14, the job-specific color check process is executed before the print job is executed.

In step S1601, the CPU 401 detects, based on a notification from the printing apparatus 203, that a print job execution start condition is satisfied for a print job. In response, the CPU 401 acquires a print job ID from the printing apparatus 203 and instructs the printing apparatus 203 to suspend the start of the print job corresponding to this ID.

In step S1602, the CPU 401 checks whether or not the received print job ID has been registered in the target print job ID 6121 in the job-specific color check profile 6000.

In a case where it is not registered in the target print job ID 6121, it is determined that the job-specific color check process is not necessary and thus the process proceeds to step S1605 in which the CPU 401 instructs the printing apparatus 203 to start executing the print job. In this case, since the process in S1607 is unnecessary, the processing flow is ended without performing S1607.

On the other hand, in a case where the received print job ID has been registered in the target print job ID 6121, it is determined that the job-specific color check process is to be performed, and thus the process proceeds to step S1603.

That is, when the print execution start is instructed for the target job to be subjected to the color check process, the color check process is executed before the execution of printing is started.

In step S1603, the CPU 401 executes the job-specific color check process. This process is performed in the manner as described in detail above.

In step S1604, the CPU 401 judges the result of the job-specific color check process.

In a case where the result of the color check process is acceptable, the process proceeds to step S1605 to instruct the printing apparatus 203 to start executing the print job. In step S1607, information described in the job-specific color check profile 6000 is updated. More specifically, the color check execution status 6003 is set to "complete", and the color check result 6010 is set to "passed". The processing flow is then ended.

On the other hand, in a case where it is determined in S1604 that the result of the color check process is unacceptable, the CPU 401 performs, in S1606, predetermined control according to the setting 6005 defining the operation to be performed when the result of the color check is not acceptable. This process is performed in the manner as described in detail above with reference to Fig. 11.

Thereafter, in step S 1607, the CPU 401 updates the information of the job-specific color check profile 6000. More specifically, the color check execution status 6003 is set to "complete", and the color check result 6010 is set to "not passed". The processing flow is then ended.

As described above, according to the first embodiment, it is possible to properly and easily generate a job-specific color check profile for each of a plurality of print jobs. In addition, it is possible to perform the job-specific color check process in conjunction with execution of each print job. This makes it possible to perform a color check process with high accuracy for each print job without impairing work efficiency of the color expert.

### Second Embodiment

In the first embodiment described above, job-specific color check profiles 6000 are generated as many as the number of print jobs for a plurality of print jobs having common print settings. That is, as many color chart output processes and measurement processes for creating reference data 6050 indicating target values are performed as the number of print jobs to be subjected to color check processes.

If the standard color check process has been passed and thus it is guaranteed that the output of the printing apparatus 203 satisfies a predetermined standard, then there is basically no large difference in color among outputs of printing performed in common settings. Therefore, when the print settings are common, the process of creating the reference data 6050 is complete by performing it only once thereby reducing consumables such as sheets, toner, and/or the like and downtime due to the processing.

In view of the above, a second embodiment described below discloses a job-specific color management profile generation unit capable of generating reference data by performing a process therefor only once when the print settings are common, as described below with reference to a specific example.

Note that the hardware configuration of the color management system according to the second embodiment and hardware configurations of a server and an apparatus are the same as those in the first embodiment described above, and thus a further description thereof is omitted.

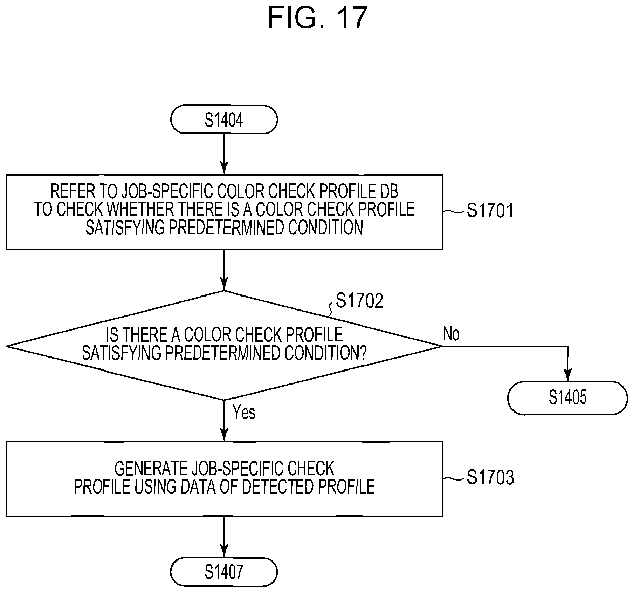

Fig. 17 is a flow chart illustrating a process executed by the site management server 102 according to the second embodiment. Note that the process shown in this flow chart is achieved by the CPU 401 by loading a program from the HDD 404 into the RAM 403 and executing the loaded program.

Note that a process associated with the process shown in this flow chart performed by the site management terminal 211 is achieved by the CPU 451 by loading a program from the HDD 454 into the RAM 453 and executing the loaded program.

Note that a process associated with the process shown in this flow chart performed by the printing apparatus 203 is achieved by the CPU 501 by loading a program from the HDD 504 into the RAM 503 and executing the loaded program.

After S1404 of the first embodiment is completed, the CPU 401 advances the processing flow to S1701 to perform the process according to the second embodiment. In step S1701, the CPU 401 refers to the print job information acquired in step S1404 and checks whether a job-specific color check profile 6000 having the same print job setting has been registered. The print job setting is a setting that affects the color of the output. Examples of items of the setting includes, a type of a sheet 6026, an input profile 6073, an output profile 6074, a halftone 6075, and the like. The items of the setting are not limited to these, but in alternative implementation, other setting items that affect the color of the output may be referred to.

Next, in a case where it is determined in S1702 that the job-specific color check profile 6000 having the same print job setting has been registered, the CPU 401 advances the processing flow to S 1703. On the other hand, in a case where it is determined that the job-specific color check profile 6000 having the same print job setting has not been registered, the CPU 401 advances the processing flow to step S1405 and executes the process of generating the job-specific color check profile in the same manner as in the first embodiment.

In step S 1703, the CPU 401 duplicates and edits the registered job-specific color check profile 6000 detected in step S1701 thereby generating and storing a color check profile 6000 for the target specific print job. More specifically, the above-described editing is performed so as to change the ID 6001 and the target print job 6121 in the duplicated job-specific color check profile 6000 to proper values for the target print job. Furthermore, the color check execution status 6003, the color measurement result 6007, and the color check result 6010 are initialized.

After the generated job-specific color check profile 6000 is saved, the CPU 401 advances the processing flow to S 1407 in the first embodiment. The following process is performed in the manner as described in the first embodiment.

According to the second embodiment, as described above, it is possible to obtain a color chart used in generating a new job-specific color check profile for a plurality of print jobs having the same print settings by performing an output and measurement process therefor only once. That is, the color check profile is shared for print jobs having the same print settings. As a result, consumables such as sheets and toner, and downtime due to processing can be reduced.

### Third Embodiment

In the first and second embodiments, as many job-specific color check profiles 6000 as the number of print jobs performed are generated. In a print site where a large number of print jobs are output, a huge number of color check profiles 6000 are used, and thus the capacity of the HDD 404 of the site management server 102 may be tight, which may hinder various information processes. In the second embodiment described above, the registered color check profiles 6000 are referred to under a predetermined condition. However, when the number of target color check profiles 6000 is enormous, it takes a long time to perform the referring process, and thus an increase occurs in downtime due to the color management work.

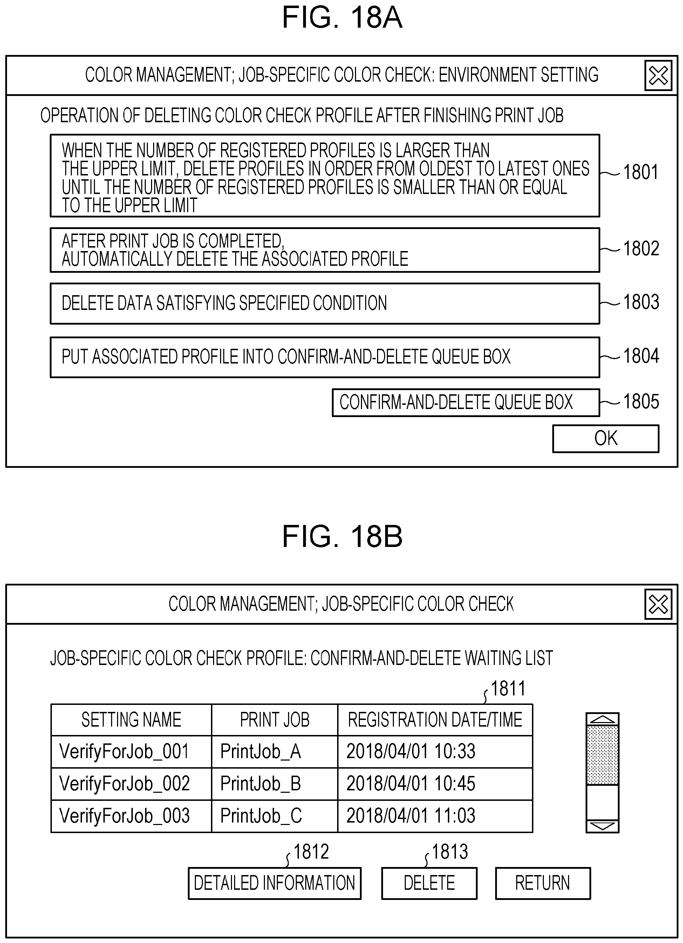

In view of the above, a third embodiment discloses a technique of deleting data related to a print-job specific color check profile 6000 after a print job related to the profile 6000 is completed, as described below with reference to Figs. 18A and 18B.

Fig. 18A is a diagram illustrating an example of a screen for setting deleting of a job-specific color check profile in setting of the environment of the site management application according to the third embodiment.

When the setting of deleting button 7008 for setting deleting of color check profiles is pressed on the screen shown in Fig. 7, the site management application execution unit 722 generates a UI screen for this setting and displays the screen on a display unit (not shown) via the UI control unit 723.

This UI screen is for allowing the color expert to select a process to be performed on the color check profile 6000 for the specific print job after the print job is completed.

When the button 1801 is selected, if the print job is completed in step S1605, the CPU 401 determines whether the number of job-specific color check profiles 6000 stored in the data management unit 704 has reached a predetermined upper limit. If the upper limit has been reached, then, based on information described in the registration date/time 6009, a profile with the oldest registration date/time is identified and deleted.

In a case where the button 1802 is selected, when the print job is completed in step S1605, the CPU 401 deletes data of the jot-specific color check profile 6000 associated with this print job. As described above, depending on the setting of the operation to be performed when the color check result is not good, a print job is forcibly executed even if the color check result is not good. In this case, if the job-specific color check profile is deleted, information indicating the fact that the color check result is not good is not displayed in the color check result column in Fig. 13. To handle the above situation, in a case where a print job is forcibly executed when a color check result is not good according to the setting, the job-specific color check profile is not deleted even after the print job is completed.

In a case where a button 1803 is selected, when the print job is completed in S1605, the CPU 401 determines whether or not the print job-specific color check profile 6000 data associated with this print job satisfies a predetermined condition, and deletes only job-specific color check profiles that satisfy the condition. The predetermined condition may be set in advance by the color expert on an environment setting screen (not shown). Specific examples of conditions include, for example, a type of a sheet to be used, the number of pages to be printed, contents of various color settings, a name of a print job, customer information, registration date and time, and the like.

In a case where a button 1804 is selected, when the print job is completed in S1605, the CPU 401 stores information on the print job-specific color check profile 6000 associated with this print job in a predetermined data area of the HDD 404. In the present embodiment, this data area is referred to as a "confirm-and-delete waiting box". More specifically, the ID information 6001 associated with the job-specific color check profile 6000 is stored.

Fig. 18B is a diagram illustrating an example of a screen for displaying job-specific color check profiles waiting for a confirm-and-delete process in setting of an environment of site management applications according to the third embodiment.

This UI screen is generated by the site management application execution unit 722 when a confirm-and-delete waiting box button 1805 on the screen shown in Fig. 18A is pressed, and the generated UI screen is displayed on a display unit (not shown) via the UI control unit 723.

Job-specific color check profiles waiting for a confirm-and-delete process to be performed and information indicating properties thereof are displayed in a list 1811 of job-specific color check profiles waiting for the confirm-and-delete process. These pieces of information are displayed by calling various pieces of information associated with the ID information 6001 stored in the "confirm-and-delete waiting box" from DBs.

When a detailed information button 1812 is pressed in a state where an arbitrary job-specific color check profile in the list 1811 is selected, detailed information on the selected job-specific color check profile is displayed on a UI screen (not shown). More specifically, various properties of the job-specific color check profile 6000 are displayed on the UI screen. For example, information described in the judgment criterion 6025, the type of sheet 6026, and/or the like is displayed.

When a delete button 1813 is pressed in a state where an arbitrary job-specific color check profile in the list 1811 is selected, the site management application execution unit 722 requests the site management server 102 to delete the selected job-specific color check profile.

According to the third embodiment, as described above, data of the job-specific color check profile 6000 that is no longer used may be deleted according to a predetermined condition. Thus, even in a case where a large number of color check profiles 6000 are generated, loads on various information processes can be reduced and thus it is possible to prevent the capacity of the HDD 404 of the site management server 102 from being tighten.

In addition, it is possible to reduce the amount of calculation related to process of referring to the registered color check profiles 6000 described in the second embodiment, and thus it is possible to reduce the downtime due to the color management process.

According to the present disclosure, it is possible to execute a color check process optimized for each print job to be executed by the printing apparatus. Thus, when there are a plurality of print jobs scheduled to be executed by the printing apparatus, each print job is executed after confirming that the printing apparatus is in a status obtained immediately after the color adjustment function has been executed and thus the printing apparatus is capable of outputting an ideal image.

### Other Embodiments

Embodiment(s) of the disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the disclosure has been described with reference to exemplary embodiments, it is to be understood that the disclosure is not limited to the disclosed exemplary embodiments. The scope of the invention is defined by the following claims.

## Claims

1. A system including at least one printing apparatus (203, 205) and a management server (102) configured to manage a color of an image output by a printing apparatus (203, 205), the system comprising:
acquisition means (405, 455) configured to acquire setting information set for a print job to be executed by the printing apparatus (203, 205), the setting information including information about at least a sheet to be used for printing and image processing to be executed on the print job;
generation means (401, 451) configured to generate, based on the acquired setting information, a profile to be used in a color check process, the profile having information about at least a type of the sheet and the image processing; and
executing means (501, 509, 510) configured to, based on receiving an instruction to execute a print job, apply the image processing to chart data, print the chart data obtained by applying the image processing on a sheet of the type, and execute a color check process using the generated profile by measuring colors of the printed chart data; and
printing means (509) configured to print an image obtained by applying the image processing on the print job on a sheet of the type based on a result of executing the color check process by the executing means (501, 509, 510).

2. The system according to Claim 1, wherein the color check process is to check whether a color of an image printed by the printing apparatus (203, 205) satisfies a preset criterion based on a color difference between a measured color value of the color of the image printed by the printing apparatus (203, 205) and a target color value.

3. The system according to Claim 1, wherein in a case where it is confirmed, via the color check process executed in accordance with the instruction, that a color value of the image output by the printing apparatus (203, 205) is appropriate, the print job is executed by the printing means (509) in response to acquiring the check result.

4. The system according to Claim 1, wherein in a case where it is confirmed, via the color check process executed in accordance with the instruction, that a color value of the image output by the printing apparatus (203, 205) is not appropriate, the printing apparatus (203, 205) is instructed to perform an adjustment process.

5. The system according to Claim 1, wherein in a case where it is confirmed, via the color check process executed in accordance with the instruction, that a color value of the image output by the printing apparatus (203, 205) is not appropriate, a notification of the check result is issued.

6. The system according to Claim 1, wherein the setting information for the job is (1) a type of the sheet used in printing image data in an execution of the job and (2) a setting of image processing used in printing image data in an execution of the job.

7. The system according to Claim 1, wherein a measured color value of an image printed by the printing apparatus (203, 205) is measured using a sensor disposed between a fixing apparatus and a sheet discharge port in a sheet conveying path in the printing apparatus (203, 205).

8. The system according to Claim 1, wherein the profile is information (1) indicating a target used in executing the color check process, (2) on a type of the sheet on which a chart used in executing the color check process is printed, and (3) on the image processing setting used in printing a chart used in executing the color check process.

9. The system according to Claim 1, wherein the generation means (401, 451) generates a profile corresponding to a job according to a specified condition.

10. The system according to Claim 1, wherein in the profile generation by the generation means (401, 451), in a case where two or more print jobs in a plurality of print jobs are equal in terms of acquired setting information, the generation means (401, 451) generates a profile that is shared among those two or more print jobs.

11. An apparatus connectable to at least one printing apparatus (203, 205), comprising:
acquisition means (405, 455) configured to acquire setting information set for a print job to be executed by the printing apparatus (203, 205), the setting information including information about at least a sheet to be used for printing and image processing to be executed on the print job;
generation means (401, 451) configured to generate, based on the acquired setting information, a profile to be used in a color check process, the profile having information about at least a type of the sheet and the image processing; and
executing means (401, 451) configured to, based on receiving an instruction to execute a print job, apply the image processing to chart data, print the chart data obtained by applying the image processing on a sheet of the type, execute the color check process using the generated profile by measuring colors of the printed chart data, and print an image obtained by applying the image processing on the print job on a sheet of the type based on a result of executing the color check process.

12. A method of controlling a system including at least one printing apparatus (203, 205) and a management server (102) configured to manage a color of an image output by the printing apparatus (203, 205), the method comprising:
acquiring setting information set for a print job instructed to be executed by the printing apparatus (203, 205), the setting information including information about at least a sheet to be used for printing and image processing to be executed on the print job;
generating, based on the acquired setting information, a profile to be used in a color check process, the profile having information about at least a type of the sheet and the image processing;
based on receiving an instruction to execute a print job, applying the image processing to chart data, printing the chart data obtained by applying the image processing on a sheet of the type, and executing the color check process using the generated profile by measuring colors of the printed chart data; and
performing printing an image obtained by applying the image processing on the print job on a sheet of the type based on a result of the color check process.

13. The method according to Claim 12, wherein the color check process is to check whether a color of an image printed by the printing apparatus satisfies a preset criterion based on a color difference between a measured color value of the color of the image printed by the printing apparatus and a target color value.

14. The method according to Claim 12, wherein in a case where it is confirmed, via the color check process executed in accordance with an instruction, that a color value of the image output by the printing apparatus is appropriate, the print job is executed by the performing printing in response to acquiring the check result.

15. The method according to Claim 12, wherein the setting information for the job is (1) a type of the sheet used in printing image data in an execution of the job and (2) a setting of image processing used in printing image data in an execution of the job.

16. The method according to Claim 12, wherein the profile is information (1) indicating a target used in executing the color check process, (2) on a type of the sheet on which a chart used in executing the color check process is printed, and (3) on the image processing setting used in printing a chart used in executing the color check process.

17. The method according to Claim 12, wherein the generating generates a profile corresponding to a job according to a specified condition.

18. The method according to Claim 12, wherein the generating, in a case where two or more print jobs in a plurality of print jobs are equal in terms of acquired setting information, generates a profile that is shared among those two or more print jobs.

19. A method of controlling an apparatus connectable to at least one printing apparatus (203, 205), the method comprising:
acquiring setting information set for a print job to be executed by the printing apparatus (203, 205), the setting information including information about at least a sheet to be used for printing and image processing to be executed on the print job;
generating, based on the acquired setting information, a profile to be used in a color check process, the profile having information about at least a type of the sheet and the image processing; and
executing, based on receiving an instruction to execute a print job, apply the image processing to chart data, print the chart data obtained by applying the image processing on a sheet of the type, execute the color check process using the generated profile by measuring colors of the printed chart data and print an image obtained by applying the image processing on the print job on a sheet of the type based on a result of executing the color check process.

20. A non-transitory computer-readable storage medium storing a computer program for causing a computer to execute a method of controlling an apparatus connectable to at least one printing apparatus (203, 205), the method comprising:
acquiring setting information set for a print job to be executed by the printing apparatus, the setting information including information about at least a sheet to be used for printing and image processing to be executed on the print job;
generating, based on the acquired setting information, a profile to be used in a color check process, the profile having information about at least a type of the sheet and the image processing; and
executing, based on receiving an instruction to execute a print job, apply the image processing to chart data, print the chart data obtained by applying the image processing on a sheet of the type, execute the color check process using the generated profile by measuring colors of the printed chart data and print an image obtained by applying the image processing on the print job on a sheet of the type based on a result of executing the color check process.

## Patentansprüche

1. System mit mindestens einer Druckvorrichtung (203, 205) und einem Verwaltungsserver (102), der konfiguriert ist, eine Farbe eines von einer Druckvorrichtung (203, 205) ausgegebenen Bilds zu verwalten, wobei das System umfasst:
eine Erfassungseinrichtung (405, 455), die konfiguriert ist, Einstellinformation zu erfassen, die für einen von der Druckvorrichtung (203, 205) auszuführenden Druckauftrag eingestellt ist, wobei die Einstellinformation Information über mindestens einen zum Drucken zu verwendenden Bogen und eine auszuführende Bildverarbeitung im Druckauftrag beinhaltet;
eine Erzeugungseinrichtung (401, 451), die konfiguriert ist, basierend auf der erfassten Einstellinformation ein in einem Farbprüfprozess zu verwendendes Profil zu erzeugen, wobei das Profil Information über mindestens einen Typ des Bogens und die Bildverarbeitung aufweist; und
eine Ausführungseinrichtung (501, 509, 510), die konfiguriert ist, basierend auf dem Empfangen einer Anweisung zum Ausführen eines Druckauftrags, die Bildverarbeitung auf Diagrammdaten anzuwenden, die durch Anwenden der Bildverarbeitung erhaltenen Diagrammdaten auf einen Bogen des Typs zu drucken und einen Farbprüfprozess unter Verwendung des erzeugten Profils durch Messen von Farben der gedruckten Diagrammdaten auszuführen; und
eine Druckeinrichtung (509), die konfiguriert ist, ein durch Anwenden der Bildverarbeitung erhaltenes Bild auf einen Bogen des Typs basierend auf einem Ergebnis des Ausführens des Farbprüfprozesses durch die Ausführungseinrichtung (501, 509, 510) im Druckauftrag zu drucken.

2. System nach Anspruch 1, wobei der Farbprüfprozess prüfen soll, ob eine Farbe eines durch die Druckvorrichtung (203, 205) gedruckten Bilds ein voreingestelltes Kriterium erfüllt, basierend auf einer Farbdifferenz zwischen einem gemessenen Farbwert der Farbe des durch die Druckvorrichtung (203, 205) gedruckten Bilds und einem Zielfarbwert.

3. System nach Anspruch 1, wobei in einem Fall, in dem über den gemäß der Anweisung ausgeführten Farbprüfprozess bestätigt wird, dass ein Farbwert des durch die Druckvorrichtung (203, 205) ausgegebenen Bilds passend ist, der Druckauftrag durch die Druckeinrichtung (509) ansprechend auf das Erfassen des Prüfergebnisses ausgeführt wird.

4. System nach Anspruch 1, wobei in einem Fall, in dem über den gemäß der Anweisung ausgeführten Farbprüfprozess bestätigt wird, dass ein Farbwert des durch die Druckvorrichtung (203, 205) ausgegebenen Bilds nicht passend ist, die Druckvorrichtung (203, 205) angewiesen wird, einen Anpassungsprozess durchzuführen.

5. System nach Anspruch 1, wobei in einem Fall, in dem über den gemäß der Anweisung ausgeführten Farbprüfprozess bestätigt wird, dass ein Farbwert des durch die Druckvorrichtung (203, 205) ausgegebenen Bilds nicht passend ist, eine Benachrichtigung über das Prüfergebnis ausgegeben wird.

6. System nach Anspruch 1, wobei die Einstellinformation für den Auftrag (1) ein Typ des beim Drucken von Bilddaten in einer Ausführung des Auftrags verwendeten Bogens und (2) eine Einstellung einer beim Drucken von Bilddaten in einer Ausführung des Auftrags verwendeten Bildverarbeitung ist.

7. System nach Anspruch 1, wobei ein gemessener Farbwert eines von der Druckvorrichtung (203, 205) gedruckten Bilds unter Verwendung eines Sensors gemessen wird, der zwischen einer Fixiervorrichtung und einer Bogenausstoßöffnung in einem Bogenförderweg in der Druckvorrichtung (203, 205) angeordnet ist.

8. System nach Anspruch 1, wobei das Profil eine Information (1), die ein beim Ausführen des Farbprüfprozesses verwendetes Ziel angibt, (2) über einen Typ des Bogens, auf den ein beim Ausführen des Farbprüfprozesses verwendetes Diagramm gedruckt wird, und (3) über die Bildverarbeitungseinstellung ist, die beim Drucken eines beim Ausführen des Farbprüfprozesses verwendeten Diagramms verwendet wird.

9. System nach Anspruch 1, wobei die Erzeugungseinrichtung (401, 451) ein Profil erzeugt, das einem Auftrag gemäß einer spezifizierten Bedingung entspricht.

10. System nach Anspruch 1, wobei in der Profilerzeugung durch die Erzeugungseinrichtung (401, 451) in einem Fall, in dem zwei oder mehr Druckaufträge in mehreren Druckaufträgen bezüglich erfasster Einstellinformation gleich sind, die Erzeugungseinrichtung (401, 451) ein Profil erzeugt, das von diesen zwei oder mehr Druckaufträgen gemeinsam genutzt wird.

11. Vorrichtung, die mit mindestens einer Druckvorrichtung (203, 205) verbindbar ist, umfassend:
eine Erfassungseinrichtung (405, 455), die konfiguriert ist, um Einstellinformation zu erfassen, die für einen von der Druckvorrichtung (203, 205) auszuführenden Druckauftrag eingestellt ist, wobei die Einstellinformation Information über mindestens einen zum Drucken zu verwendenden Bogen und eine auszuführende Bildverarbeitung im Druckauftrag beinhaltet;
eine Erzeugungseinrichtung (401, 451), die konfiguriert ist, basierend auf der erfassten Einstellinformation ein in einem Farbprüfprozess zu verwendendes Profil zu erzeugen, wobei das Profil Information über mindestens einen Typ des Bogens und die Bildverarbeitung aufweist; und
eine Ausführungseinrichtung (401, 451), die konfiguriert ist, basierend auf dem Empfangen einer Anweisung zum Ausführen eines Druckauftrags, die Bildverarbeitung auf Diagrammdaten anzuwenden, die durch Anwenden der Bildverarbeitung erhaltenen Diagrammdaten auf einen Bogen des Typs zu drucken, den Farbprüfprozess unter Verwendung des erzeugten Profils durch Messen von Farben der gedruckten Diagrammdaten auszuführen und ein durch Anwenden der Bildverarbeitung erhaltenes Bild auf einen Bogen des Typs basierend auf einem Ergebnis des Ausführens des Farbprüfprozesses im Druckauftrag zu drucken.

12. Verfahren zum Steuern eines Systems mit mindestens einer Druckvorrichtung (203, 205) und einem Verwaltungsserver (102), der konfiguriert ist, eine Farbe eines von der Druckvorrichtung (203, 205) ausgegebenen Bilds zu verwalten, wobei das Verfahren umfasst:
Erfassen von Einstellinformation, die für einen Druckauftrag eingestellt ist, der angewiesen ist, von der Druckvorrichtung (203, 205) ausgeführt zu werden, wobei die Einstellinformation Information über mindestens einen zum Drucken zu verwendenden Bogen und eine auszuführende Bildverarbeitung im Druckauftrag beinhaltet;
Erzeugen, basierend auf der erfassten Einstellinformation, eines in einem Farbprüfprozess zu verwendenden Profils, wobei das Profil Information über mindestens einen Typ des Bogens und die Bildverarbeitung aufweist;
basierend auf dem Empfangen einer Anweisung zum Ausführen eines Druckauftrags, Anwenden der Bildverarbeitung auf Diagrammdaten, Drucken der durch Anwenden der Bildverarbeitung erhaltenen Diagrammdaten auf einen Bogen des Typs und Ausführen des Farbprüfprozesses unter Verwendung des erzeugten Profils durch Messen von Farben der gedruckten Diagrammdaten; und
Durchführen des Druckens, im Druckauftrag, eines durch Anwenden der Bildverarbeitung erhaltenen Bilds auf einen Bogen des Typs basierend auf einem Ergebnis des Farbprüfprozesses.

13. Verfahren nach Anspruch 12, wobei der Farbprüfprozess prüfen soll, ob eine Farbe eines durch die Druckvorrichtung gedruckten Bilds ein voreingestelltes Kriterium erfüllt, basierend auf einer Farbdifferenz zwischen einem gemessenen Farbwert der Farbe des durch die Druckvorrichtung gedruckten Bilds und einem Zielfarbwert.

14. Verfahren nach Anspruch 12, wobei in einem Fall, in dem über den gemäß einer Anweisung ausgeführten Farbprüfprozess bestätigt wird, dass ein Farbwert des durch die Druckvorrichtung ausgegebenen Bilds passend ist, der Druckauftrag durch das Durchführen des Druckens ansprechend auf das Erfassen des Prüfergebnisses ausgeführt wird.

15. Verfahren nach Anspruch 12, wobei die Einstellinformation für den Auftrag (1) ein Typ des beim Drucken von Bilddaten in einer Ausführung des Auftrags verwendeten Bogens und (2) eine Einstellung einer beim Drucken von Bilddaten in einer Ausführung des Auftrags verwendeten Bildverarbeitung ist.

16. Verfahren nach Anspruch 12, wobei das Profil eine Information (1), die ein beim Ausführen des Farbprüfprozesses verwendetes Ziel angibt, (2) über einen Typ des Bogens, auf den ein beim Ausführen des Farbprüfprozesses verwendetes Diagramm gedruckt wird, und (3) über die Bildverarbeitungseinstellung ist, die beim Drucken eines beim Ausführen des Farbprüfprozesses verwendeten Diagramms verwendet wird.

17. Verfahren nach Anspruch 12, wobei das Erzeugen ein Profil erzeugt, das einem Auftrag gemäß einer spezifizierten Bedingung entspricht.

18. Verfahren nach Anspruch 12, wobei das Erzeugen in einem Fall, in dem zwei oder mehr Druckaufträge in mehreren Druckaufträgen bezüglich erfasster Einstellinformation gleich sind, ein Profil erzeugt, das von diesen zwei oder mehr Druckaufträgen gemeinsam genutzt wird.

19. Verfahren zum Steuern einer Vorrichtung, die mit mindestens einer Druckvorrichtung (203, 205) verbindbar ist, wobei das Verfahren umfasst:
Erfassen von Einstellinformation, die für einen von der Druckvorrichtung (203, 205) auszuführenden Druckauftrag eingestellt ist, wobei die Einstellinformation Information über mindestens einen zum Drucken zu verwendenden Bogen und eine auszuführende Bildverarbeitung im Druckauftrag beinhaltet;
Erzeugen, basierend auf der erfassten Einstellinformation, eines in einem Farbprüfprozess zu verwendenden Profils, wobei das Profil Information über mindestens einen Typ des Bogens und die Bildverarbeitung aufweist; und
Ausführen, basierend auf dem Empfangen einer Anweisung zum Ausführen eines Druckauftrags, von Anwenden der Bildverarbeitung auf Diagrammdaten, Drucken der durch Anwenden der Bildverarbeitung erhaltenen Diagrammdaten auf einen Bogen des Typs, Ausführen des Farbprüfprozesses unter Verwendung des erzeugten Profils durch Messen von Farben der gedruckten Diagrammdaten und Drucken eines durch Anwenden der Bildverarbeitung erhaltenen Bilds im Druckauftrag auf einen Bogen des Typs basierend auf einem Ergebnis des Ausführens des Farbprüfprozesses.

20. Nichtflüchtiges computerlesbares Speichermedium, das ein Computerprogramm speichert, um einen Computer zu veranlassen, ein Verfahren zum Steuern einer Vorrichtung auszuführen, die mit mindestens einer Druckvorrichtung (203, 205) verbindbar ist, wobei das Verfahren umfasst:
Erfassen von Einstellinformation, die für einen von der Druckvorrichtung auszuführenden Druckauftrag eingestellt ist, wobei die Einstellinformation Information über mindestens einen zum Drucken zu verwendenden Bogen und eine auszuführende Bildverarbeitung im Druckauftrag beinhaltet;
Erzeugen, basierend auf der erfassten Einstellinformation, eines in einem Farbprüfprozess zu verwendenden Profils, wobei das Profil Information über mindestens einen Typ des Bogens und die Bildverarbeitung aufweist; und
Ausführen, basierend auf dem Empfangen einer Anweisung zum Ausführen eines Druckauftrags, von Anwenden der Bildverarbeitung auf Diagrammdaten, Drucken der durch Anwenden der Bildverarbeitung erhaltenen Diagrammdaten auf einen Bogen des Typs, Ausführen des Farbprüfprozesses unter Verwendung des erzeugten Profils durch Messen von Farben der gedruckten Diagrammdaten und Drucken eines durch Anwenden der Bildverarbeitung erhaltenen Bilds auf einen Bogen des Typs basierend auf einem Ergebnis des Ausführens des Farbprüfprozesses im Druckauftrag.

## Revendications

1. Système comprenant au moins un appareil d'impression (203, 205) et un serveur de gestion (102) configuré pour gérer une couleur d'une image fournie en sortie par un appareil d'impression (203, 205), le système comprenant :
un moyen d'acquisition (405, 455) configuré pour acquérir des informations de réglage définies pour une tâche d'impression devant être exécutée par l'appareil d'impression (203, 205), les informations de réglage comprenant des informations concernant au moins une feuille devant être utilisée pour l'impression et le traitement d'images devant être exécuté sur la tâche d'impression ;
un moyen de génération (401, 451) configuré pour générer, sur la base des informations de réglage acquises, un profil devant être utilisé lors d'un processus de vérification des couleurs, le profil comportant des informations concernant au moins un type de la feuille et le traitement d'images ; et
un moyen d'exécution (501, 509, 510) configuré pour, sur la base de la réception d'une instruction pour exécuter une tâche d'impression, appliquer le traitement d'images à des données de charte, imprimer les données de charte obtenues en appliquant le traitement d'images à une feuille dudit type, et exécuter un processus de vérification des couleurs au moyen du profil généré en mesurant des couleurs des données de charte imprimées ; et
un moyen d'impression (509) configuré pour imprimer une image obtenue en appliquant le traitement d'images à la tâche d'impression sur une feuille dudit type sur la base d'un résultat de l'exécution du processus de vérification des couleurs par le moyen d'exécution (501, 509, 510).

2. Système selon la revendication 1, dans lequel le processus de vérification des couleurs est destiné à vérifier si une couleur d'une image imprimée par l'appareil d'impression (203, 205) satisfait à un critère prédéfini sur la base d'une différence de couleur entre une valeur de couleur mesurée de la couleur de l'image imprimée par l'appareil d'impression (203, 205) et une valeur de couleur cible.

3. Système selon la revendication 1, dans lequel, dans un cas où il est confirmé, par l'intermédiaire du processus de vérification des couleurs exécuté conformément à l'instruction, qu'une valeur de couleur de l'image fournie en sortie par l'appareil d'impression (203, 205) est appropriée, la tâche d'impression est exécutée par le moyen d'impression (509) en réponse à l'acquisition du résultat de vérification.

4. Système selon la revendication 1, dans lequel, dans un cas où il est confirmé, par l'intermédiaire du processus de vérification des couleurs exécuté conformément à l'instruction, qu'une valeur de couleur de l'image fournie en sortie par l'appareil d'impression (203, 205) n'est pas appropriée, l'appareil d'impression (203, 205) reçoit l'instruction d'effectuer un processus d'ajustement.

5. Système selon la revendication 1, dans lequel, dans un cas où il est confirmé, par l'intermédiaire du processus de vérification des couleurs exécuté conformément à l'instruction, qu'une valeur de couleur de l'image fournie en sortie par l'appareil d'impression (203, 205) n'est pas appropriée, une notification du résultat de vérification est émise.

6. Système selon la revendication 1, dans lequel les informations de réglage destinées à la tâche sont (1) un type de la feuille utilisée pour imprimer des données d'image lors d'une exécution de la tâche et (2) un réglage du traitement d'images utilisé pour imprimer des données d'image lors d'une exécution de la tâche.

7. Système selon la revendication 1, dans lequel une valeur de couleur mesurée d'une image imprimée par l'appareil d'impression (203, 205) est mesurée au moyen d'un capteur disposé entre un appareil de fixage et un orifice de décharge de feuille sur un trajet de transport de feuille dans l'appareil d'impression (203, 205).

8. Système selon la revendication 1, dans lequel le profil est une information (1) indiquant une cible utilisée lors de l'exécution du processus de vérification des couleurs, (2) sur un type de la feuille sur laquelle est imprimée une charte utilisée lors de l'exécution du processus de vérification des couleurs, et (3) sur le réglage de traitement d'images utilisé lors de l'impression d'une charte utilisée lors de l'exécution du processus de vérification des couleurs.

9. Système selon la revendication 1, dans lequel le moyen de génération (401, 451) génère un profil correspondant à une tâche conformément à une condition spécifiée.

10. Système selon la revendication 1, dans lequel, lors de la génération de profil par le moyen de génération (401, 451), dans un cas où deux ou plus de deux tâches d'impression parmi une pluralité de tâches d'impression sont égales en termes d'informations de réglage acquises, le moyen de génération (401, 451) génère un profil qui est partagé entre ces deux ou plus de deux tâches d'impression.

11. Appareil pouvant être connecté à au moins un appareil d'impression (203, 205), comprenant :
un moyen d'acquisition (405, 455) configuré pour acquérir des informations de réglage définies pour une tâche d'impression devant être exécutée par l'appareil d'impression (203, 205), les informations de réglage comprenant des informations concernant au moins une feuille devant être utilisée pour l'impression et le traitement d'images devant être exécuté sur la tâche d'impression ;
un moyen de génération (401, 451) configuré pour générer, sur la base des informations de réglage acquises, un profil devant être utilisé lors d'un processus de vérification des couleurs, le profil comportant des informations concernant au moins un type de la feuille et le traitement d'images ; et
un moyen d'exécution (401, 451) configuré pour, sur la base de la réception d'une instruction pour exécuter une tâche d'impression, appliquer le traitement d'images à des données de charte, imprimer les données de charte obtenues en appliquant le traitement d'images à une feuille dudit type, exécuter le processus de vérification des couleurs au moyen du profil généré en mesurant des couleurs des données de charte imprimées, et imprimer une image obtenue en appliquant le traitement d'images à la tâche d'impression sur une feuille dudit type sur la base d'un résultat de l'exécution du processus de vérification des couleurs.

12. Procédé de commande d'un système comprenant au moins un appareil d'impression (203, 205) et un serveur de gestion (102) configuré pour gérer une couleur d'une image fournie en sortie par l'appareil d'impression (203, 205), le procédé comprenant les étapes consistant en :
l'acquisition d'informations de réglage définies pour une tâche d'impression dont l'exécution par l'appareil d'impression (203, 205) est ordonnée, les informations de réglage comprenant des informations concernant au moins une feuille devant être utilisée pour l'impression et le traitement d'images devant être exécuté sur la tâche d'impression ;
la génération, sur la base des informations de réglage acquises, d'un profil devant être utilisé lors d'un processus de vérification des couleurs, le profil comportant des informations concernant au moins un type de la feuille et le traitement d'images ;
sur la base de la réception d'une instruction pour exécuter une tâche d'impression, l'application du traitement d'images à des données de charte, l'impression des données de charte obtenues en appliquant le traitement d'images à une feuille dudit type, et l'exécution du processus de vérification des couleurs au moyen du profil généré en mesurant des couleurs des données de charte imprimées ; et
le fait d'effectuer l'impression d'une image obtenue en appliquant le traitement d'images à la tâche d'impression sur une feuille dudit type sur la base d'un résultat du processus de vérification des couleurs.

13. Procédé selon la revendication 12, dans lequel le processus de vérification des couleurs est destiné à vérifier si une couleur d'une image imprimée par l'appareil d'impression satisfait à un critère prédéfini sur la base d'une différence de couleur entre une valeur de couleur mesurée de la couleur de l'image imprimée par l'appareil d'impression et une valeur de couleur cible.

14. Procédé selon la revendication 12, dans lequel, dans un cas où il est confirmé, par l'intermédiaire du processus de vérification des couleurs exécuté conformément à une instruction, qu'une valeur de couleur de l'image fournie en sortie par l'appareil d'impression est appropriée, la tâche d'impression est exécutée en effectuant l'impression en réponse à l'acquisition du résultat de vérification.

15. Procédé selon la revendication 12, dans lequel les informations de réglage destinées à la tâche sont (1) un type de la feuille utilisée pour imprimer des données d'image lors d'une exécution de la tâche et (2) un réglage du traitement d'images utilisé pour imprimer des données d'image lors d'une exécution de la tâche.

16. Procédé selon la revendication 12, dans lequel le profil est une information (1) indiquant une cible utilisée lors de l'exécution du processus de vérification des couleurs, (2) sur un type de la feuille sur laquelle est imprimée une charte utilisée lors de l'exécution du processus de vérification des couleurs, et (3) sur le réglage de traitement d'images utilisé lors de l'impression d'une charte utilisée lors de l'exécution du processus de vérification des couleurs.

17. Procédé selon la revendication 12, dans lequel la génération génère un profil correspondant à une tâche conformément à une condition spécifiée.

18. Procédé selon la revendication 12, dans lequel la génération, dans un cas où deux ou plus de deux tâches d'impression parmi une pluralité de tâches d'impression sont égales en termes d'informations de réglage acquises, génère un profil qui est partagé entre ces deux ou plus de deux tâches d'impression.

19. Procédé de commande d'un appareil pouvant être connecté à au moins un appareil d'impression (203, 205), le procédé comprenant les étapes consistant en :
l'acquisition d'informations de réglage définies pour une tâche d'impression devant être exécutée par l'appareil d'impression (203, 205), les informations de réglage comprenant des informations concernant au moins une feuille devant être utilisée pour l'impression et le traitement d'images devant être exécuté sur la tâche d'impression ;
la génération, sur la base des informations de réglage acquises, d'un profil devant être utilisé lors d'un processus de vérification des couleurs, le profil comportant des informations concernant au moins un type de la feuille et le traitement d'images ; et
l'exécution consistant à, sur la base de la réception d'une instruction pour exécuter une tâche d'impression, appliquer le traitement d'images à des données de charte, imprimer les données de charte obtenues en appliquant le traitement d'images à une feuille dudit type, exécuter le processus de vérification des couleurs au moyen du profil généré en mesurant des couleurs des données de charte imprimées et imprimer une image obtenue en appliquant le traitement d'images à la tâche d'impression sur une feuille dudit type sur la base d'un résultat de l'exécution du processus de vérification des couleurs.

20. Support de stockage lisible par ordinateur non transitoire stockant un programme d'ordinateur destiné à amener un ordinateur à exécuter un procédé de commande d'un appareil pouvant être connecté à au moins un appareil d'impression (203, 205), le procédé comprenant les étapes consistant en :
l'acquisition d'informations de réglage définies pour une tâche d'impression devant être exécutée par l'appareil d'impression, les informations de réglage comprenant des informations concernant au moins une feuille devant être utilisée pour l'impression et le traitement d'images devant être exécuté sur la tâche d'impression ;
la génération, sur la base des informations de réglage acquises, d'un profil devant être utilisé lors d'un processus de vérification des couleurs, le profil comportant des informations concernant au moins un type de la feuille et le traitement d'images ; et
l'exécution consistant à, sur la base de la réception d'une instruction pour exécuter une tâche d'impression, appliquer le traitement d'images à des données de charte, imprimer les données de charte obtenues en appliquant le traitement d'images à une feuille dudit type, exécuter le processus de vérification des couleurs au moyen du profil généré en mesurant des couleurs des données de charte imprimées et imprimer une image obtenue en appliquant le traitement d'images à la tâche d'impression sur une feuille dudit type sur la base d'un résultat de l'exécution du processus de vérification des couleurs.
